(19) **Europäisches Patentamt / European Patent Office / Office européen des brevets**

(11) **EP 3 197 001 A1**

(12) **EUROPEAN PATENT APPLICATION**
published in accordance with Art. 153(4) EPC

(43) Date of publication:
26.07.2017 Bulletin 2017/30

(21) Application number: 15841461.5

(22) Date of filing: 16.09.2015

(51) Int Cl.:
*H02J 3/32* (2006.01)   *H02J 3/00* (2006.01)
*H02J 3/38* (2006.01)

(86) International application number:
**PCT/JP2015/076360**

(87) International publication number:
**WO 2016/043243 (24.03.2016 Gazette 2016/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 16.09.2014   JP 2014188285
17.07.2015   JP 2015143175

(71) Applicant: **Sekisui Chemical Co., Ltd.**
**Osaka-shi, Osaka 530-8565 (JP)**

(72) Inventors:
• **SUGAHARA Yasuhiro**
**Tsukuba-shi**
**Ibaraki 300-4292 (JP)**
• **MATSUZAKI Junichi**
**Tsukuba-shi**
**Ibaraki 300-4292 (JP)**
• **UENISHI Akihiro**
**Tsukuba-shi**
**Ibaraki 300-4292 (JP)**
• **MORI Nobuhiro**
**Tsukuba-shi**
**Ibaraki 300-4292 (JP)**

(74) Representative: **Müller-Boré & Partner**
**Patentanwälte PartG mbB**
**Friedenheimer Brücke 21**
**80639 München (DE)**

(54) **POWER MANAGEMENT SYSTEM AND POWER MANAGEMENT METHOD**

(57) The present invention is a power management system, which is connected to a system power supply, and which, with respect to a storage battery in a first customer facility having a storage battery and a power generator as electrical equipment, controls discharge thereof to the first customer facility or charge thereof with surplus power generated in the first customer facility, the power management system comprising: a power consumption estimation unit which, based on a first filter estimation function to make estimation by measured value of power consumption in a limited period of past measurement, estimates power consumption of next period of measurement in the first customer facility as an estimated power consumption; a power generation estimation unit which, based on a second filter estimation function to make estimation by measured value of power generation in a limited period of past measurement, estimates power generation by the power generator of next period of measurement in the first customer facility as an estimated power generation; an surplus power estimation unit which obtains an estimated surplus power which is a difference between the estimated power generation and the estimated power consumption; and a power management unit for controlling each of the charge and discharge of the storage battery, based on the estimated surplus power obtained by the surplus power estimation unit.

FIG. 1

**Description**

TECHNICAL FIELD

The present invention relates to a power management system and a power management method. Priority is claimed on Japanese Patent Application No. 2014-188285, filed September 16, 2014, and Japanese Patent Application No. 2015-143175, filed July 17, 2015, the contents of which are incorporated herein by reference.

BACKGROUND ART

Recently, a power management system having a power generator for power generation using renewable energy (natural energy) such as solar power generation, and a storage battery, is known (see, for example, Patent Document 1). Further, there is known a power management system that controls the charge and discharge of a storage battery based on the estimates of power generation and power consumption, taking into account the charge level of the battery, thereby realizing effective utilization of energy (see, for example, Patent Document 2).

Furthermore, there is also known a power management system that performs power management in a community formed of a plurality of customers (see, for example, Patent Document 3). Such a power management system that deals with a plurality of customers is also referred to as TEMS (Town Energy Management System) or CEMS (Community Energy Management System).

When TEMS or CEMS encounters a situation where the load power is small relative to the power generated by a solar power generation (or wind power generation) facility, for example, during daytime under fine weather conditions, a surplus electric power may be generated by the solar power generation facility. When a surplus power is obtained at a solar power generation facility (such as residential houses, commercial facilities, industrial facilities) in a customer facility, based on the generated power and consumed power by using the technique of Patent Document 2, for example, the surplus power may be charged to the storage battery of the customer facility whereby the surplus power can be effectively used in the community without causing the surplus power to flow back to the system power supply.

Further, a power management system is known which adjust the balance between the power stored by a storage battery and the power consumed by load, wherein the power stored by a storage battery is based on the surplus power estimated based on the estimated power generation and the estimated power consumption (see, for example, Patent Document 4).

DOCUMENTS OF RELATED ART

[Patent Document]

Patent Document 1: Japanese Unexamined Patent Application Publication No. 2012-044733
Patent Document 1: Japanese Unexamined Patent Application Publication No. 2013-215092
Patent Document 3: Japanese Unexamined Patent Application Publication No. 2012-055078
Patent Document 4: Japanese Unexamined Patent Application Publication No. 2013-215092

DISCLOSURE OF INVENTION

PROBLEMS TO BE SOLVED BY THE INVENTION

However, currently, the solar power generation facilities are becoming widespread, and it has been attempted to increase the capacities of the photovoltaic modules in the solar power facilities. Therefore, concerning the surplus power occurred as a result of the power generation in the solar power generation facilities of TEMS, some of the surplus power may remain to be unchargeable to the storage battery. Such remaining power may, for example, flow out to the system power supply to become a loss, and therefore is a power generated in the solar power generation facilities which, however, cannot be efficiently utilized.

That is, in general, the surplus power is charged to the storage batteries of the residences per customer facility; however, there are discrepancies in power generation and power demand between the customer facilities. Therefore, not all the surplus power occurred as a result of the power generation in the solar power generation facilities can be charged to the storage battery in the case of a customer facility with relatively small power demand, thereby allowing the unchargeable surplus power to flow out to the system power supply. Thus, a part of the generated power becomes a wasteful loss. On the other hand, in the case of a customer facility with a higher power demand relative to the power generation, the storage battery cannot be sufficiently charged, thereby necessitating the purchased power for charging the storage battery. In such a situation, the power generated by the solar power generation facility cannot be effectively utilized at each customer facility in the community, and the storage facilities are not sufficiently utilized as well.

One conceivable solution to this problem is to use TEMS or CEMS to grasp via a network the surplus power at the customer facilities of the management target as a whole as well as the remaining power of the batteries installed in the residences, so as to use up the capacity of the storage batteries in the entire customer facilities of the community. However, concerning the surplus power, the amounts of generated power and demanded power change from moment to moment; therefore, even if the power generation is controlled based on the measurement data obtained in the current control period, the change in the amount of generated power or demanded power in the next control period causes a deviation from the estimated surplus power.

In other words, although the charging of the storage battery is controlled with the calculated surplus amount, since the surplus amount of power in the current control period is estimated from the data of the immediately preceding control period, the discrepancy between the actual surplus power and the estimated surplus power becomes an error of control. For example, even when the surplus power is estimated to be 6kW from the immediately preceding control period and a control is made so as to charge the storage battery with the power of 6 kW in the current control period, the actual surplus power may become 4 kW depending on the change of environmental factors. In this case, a sufficient power cannot be supplied within the community while the power of 2 kW as the difference between the estimated value and the actual value (= 6 kW - 4 kW) results in the overcharge; therefore, this amount of power as the difference must be purchased from the system power supply.

On the other hand, in a contrary case where there are a plurality of customer facilities with their residents being absent, the power demand sharply decreases and the actual surplus power becomes 8 kW. In this case, the power cannot be consumed within the community, and the power of -2 kW as the difference between the estimated value and the actual value (= 6 kW - 8 kW) cannot be charged, thereby causing the power to flows back to the system, wherein this amount of power as the difference becomes an error of control.

As to the benefit of the error, the case where power companies do not purchase the surplus power at all is considered here, which, however, may be dependent on the contract with the power companies. In this case, if the error is a negative value, the power flown back to the system can be regarded as being discarded and, hence, becomes economic loss to the residents of the customer facilities. Further, in the case where the error becomes a positive value despite the original desire to charge only the surplus power, the purchase of unnecessary power is forced, whereby the purchase amount becomes a loss to the residents of the customer facilities.

Thus, as the difference between the estimated surplus power and the actual surplus power as an error increases, the greater economic loss is imposed on the customer facilities equipped with power generators utilizing renewable energy.

In addition, as the power generation apparatuses utilizing the renewable energy such as solar power or wind power, the output of which fluctuates naturally, are introduced more widely, there is a possibility that the power supply surpasses the power demand. Therefore, when the weather conditions and the like predict that the power supply exceeds the power supply adjustment capability of the power generator means by thermal power generation and the like, which can adjust the output, it becomes necessary to stop the output of the solar or wind power generation so as to prevent the back flow of the power to the system. In order to stably supply power to a power grid of the system power supply, the determination of whether or not this output suppression is necessary is made by a transmission and distribution company which transmits and distributes power to that power grid. When the output suppression is imposed on a customer facility by a power transmission and distribution company, the customer facility, if equipped with a storage battery in addition to a power generation means utilizing renewable energy such as solar power generator, can store the surplus power to the storage battery, wherein the surplus power is a power obtained by subtracting the consumed power from the power generated by the power generation means. However, if the storage battery at the customer facility is in a fully charged state, the surplus in the power generated by the power generator results in being flown back to the system power supply.

The present invention has been made in view of such circumstances, and the object of the present invention is to provide a power management system and a power management method, which improves the accuracy of the estimate of surplus power as compared to the conventional technique, thereby reducing the flow back of the power generated at customer facilities to the commercial power source and reducing the economic loss in the power supply and demand, and which imposes the output suppression on each customer facility in response to the output suppression imposed by a transmission and distribution company.

MEANS TO SOLVE THE PROBLEMS

The power management system according to one embodiment of the present invention is connected to a system power supply, which, with respect to a storage battery in a first customer facility comprising a storage battery and a power generator as electrical equipment, controls discharge thereof to the first customer facility or charge thereof with surplus power generated in the first customer facility, the power management system comprising: a power consumption estimation unit which, based on a first filter estimation function to make estimation by measured value of power consumption in a limited period of past measurement, estimates power consumption of next period of measurement in the first customer facility as an estimated power consumption; a power generation estimation unit which, based on a second filter estimation function to make estimation by measured value of power generation in a limited period of past measurement, estimates power generation by the power generator of next period of measurement in the first customer facility as an estimated power generation; a surplus power estimation unit which obtains an estimated surplus power which is a difference between the estimated power generation and the estimated power consumption; and a power management unit for controlling each of the charge and discharge of the storage battery, based on the estimated surplus power obtained by the surplus power estimation unit.

The power management system according to one embodiment of the present invention controls each of the charge and discharge of a plurality of the storage batteries of customer facilities including the first customer facility comprising the storage battery and the power generator as electrical equipment and a second customer facility lacking one of the storage battery and the power generator, both being connected commonly to the system power supply, wherein the power consumption estimation unit, the power generation estimation unit and the surplus power estimation unit respectively obtain the estimated power consumption, the estimated power generation and the estimated surplus power, and the power management unit controls the charge and discharge of the storage battery of each of the customer facilities, based on the estimated surplus power of each of the customer facilities.

In the power management system according one embodiment of the present invention, the first filter estimation function for obtaining the estimated power consumption is defined by equation (1) below, the weighting parameter w1 for each tap in the filter estimation function is set by a predetermined first function, and the second filter estimation function for obtaining the estimated power generation is defined by equation (2) below, and the weighting parameter w2 for each tap in the filter estimation function is set by a predetermined second function.

In the power management system according one embodiment of the present invention, the first function to set the weighting parameter w1 for each tap in the first filter estimation function for obtaining the estimated power consumption is defined by equation (3) below, and the second function to set the weighting parameter w2 for each tap in the second filter estimation function for obtaining the estimated power generation is defined by equation (4) below.

In the power management system according to one embodiment of the present invention, each of the weighting coefficient $\beta$ and the tracking number n in the first function is previously set as a estimation pattern which is a set of different numerical values corresponding to control modes, and each of the weighting coefficient a and the tracking number m in the second function is previously set as a estimation pattern which is a set of different numerical values corresponding to control modes.

In the power management system according to one embodiment of the present invention, the measured value of power generation is a power generated by the power generator which is measured in a latest limited period of past measurement.

In the power management system according one embodiment of the present invention, the measured value of power consumption is a power consumed in the customer facility which is measured in a latest limited period of past measurement.

In the power management system according to one embodiment of the present invention, the measured value of power generation is a total of the measured values of power generation in a plurality of the customer facilities.

In the power management system according to one embodiment of the present invention, the measured value of power consumption is a total of the measured values of power consumption in a plurality of the customer facilities.

In the power management system according to one embodiment of the present invention, the estimated power generation is a total of values of the estimated power generation in an arbitrary plurality of the customer facilities.

In the power management system according to one embodiment of the present invention, the estimated power consumption generation is a total of values of the estimated power consumption in an arbitrary plurality of the customer facilities.

In the power management system according to one embodiment of the present invention, the estimated power generation is a total of values of the estimated power generation in the customer facilities.

In the power management system according to one embodiment of the present invention, the estimated power consumption is a total of values of the estimated power consumption in the customer facilities.

In the power management system according to one embodiment of the present invention, the difference between the estimated power generation and the estimated power consumption is a total of values of the estimated power generation in arbitrary plurality of the customer facilities.

In the power management system according to one embodiment of the present invention, the difference between the estimated power generation and the estimated power consumption is a difference between the total of values of the estimated power generation in the customer facilities and the total of values of the estimated power consumption in the customer facilities.

In the power management system according to one embodiment of the present invention, the control of the discharge and charge of the storage battery based on a differential power obtained in the period of measurement is performed for a control period which is the same as the period of measurement or for a control period formed by a plurality of periods of measurement, depending on mode of the control.

The power management method in one embodiment of the present invention for controlling a power management system which is connected to a system power supply, and which, with respect to a storage battery in a first customer facility comprising a storage battery and a power generator as electrical equipment, controls discharge thereof to the first customer facility or charge thereof with surplus power generated in the first customer facility, the power management method comprising: a power consumption estimation step wherein, based on a first filter estimation function to make estimation by measured value of power consumption in a limited period of past measurement, a power consumption estimation unit estimates power consumption of next period of measurement in the first customer facility as an estimated power consumption; a power generation estimation step wherein, based on a second filter estimation function to make estimation by measured value of power generation in a limited period of past measurement, a power generation estimation unit estimates power generation of next period of measurement in the first customer facility as an estimated power generation; a surplus power estimation step wherein a surplus power estimation unit obtains an estimated surplus power which is a difference between the estimated power generation and the estimated power consumption; and a power management step wherein a power management unit controls each of the charge and discharge of the storage battery, based on the estimated surplus power obtained by the surplus power estimation unit.

The power management method according to one embodiment of the present invention controls each of the charge and discharge of a plurality of the storage batteries of customer facilities including the first customer facility comprising the storage battery and the power generator as electrical equipment and a second customer facility lacking one of the storage battery and the power generator, while being connected to the system power supply; the power consumption estimation unit, the power generation estimation unit and the surplus power estimation unit respectively obtain the estimated power consumption, the estimated power generation and the estimated surplus power; and the power management unit controls the charge and discharge of the storage battery of each of the customer facilities, based on the estimated surplus power of each of the customer facilities.

The power management method according to one embodiment of the present invention controls each of the charge and discharge of a plurality of the storage batteries of customer facilities including the first customer facility comprising the storage battery and the power generator as electrical equipment and a second customer facility lacking one of the storage battery and the power generator, while being connected to the system power supply; the power consumption estimation unit, the power generation estimation unit and the surplus power estimation unit respectively obtain the estimated power consumption, the estimated power generation and the estimated surplus power; and the power management unit controls the charge and discharge of the storage battery of each of the customer facilities, based on the estimated surplus power of each of the customer facilities, and performs an output suppression control, based on a total surplus power and a total chargeable power.

In the power management method according to one embodiment of the present invention, the power management unit obtains a total surplus power which is a total surplus of powers generated by the power generators in the customer facilities, obtains a total chargeable power which is a total of chargeable powers of the storage batteries in the customer facilities, and requests an output suppression control to the customer facilities when the total surplus power exceeds the total chargeable power.

The power management method according to one embodiment of the present invention controls each of the charge and discharge of a plurality of the storage batteries of customer facilities including the first customer facility comprising the storage battery and the power generator as electrical equipment and a second customer facility lacking one of the storage battery and the power generator, while being connected to the system power supply; the power consumption estimation unit, the power generation estimation unit and the surplus power estimation unit respectively obtain the estimated power consumption, the estimated power generation and the estimated surplus power; and the power management unit controls the charge and discharge of the storage battery of each of the customer facilities, based on the estimated surplus power of each of the customer facilities.

In the power management method according to one embodiment of the present invention, the power management unit performs the output suppression control from the second customer facility lacking the storage battery.

In the power management method according to one embodiment of the present invention, the power management unit performs the output suppression control from the first customer facility with the storage battery thereof being fully charged and the second customer facility having the storage battery.

Further, a communication unit is provided that receives an output suppression command form a transmission and distribution company, and a calculation function is provided that, upon receiving the output suppression command, suppresses the total of the back flow of the power from the customer facilities under control to a suppressed range prescribed in the command.

EFFECT OF THE INVENTION

The present invention can provide a power management system and a power management method, which improves the accuracy of the estimate of surplus power as compared to the conventional technique, whereby the flow back of the power generated at customer facilities to the commercial power source can be reduced to enable utilization of the surplus power with higher accuracy than the conventional technique, and to reduce the economic loss in the power supply and demand.

Further, the present invention can provide a power management system and a power management method, which imposes the output suppression on each customer facility in response to the output suppression imposed by a transmission and distribution company.

BRIEF DESCRIPTION OF THE DRAWINGS

FIG. 1 shows an example of configuration of a power management system according to the first embodiment (or the third embodiment) of the present invention.

FIG. 2 shows an example of configuration of electrical equipment belonging to a customer facility 10.

FIG. 3 shows an example of configuration of a power management system 200 adapted to power distribution control.

FIG. 4 shows an example of configuration of an inverter efficiency data table 240 stored in an inverter efficiency data storing unit 224.

FIG. 5 shows an example of inverter efficiency characteristics of an inverter 104.

FIG. 6 is a schematic view of a power system between a photovoltaic module 101 (101-1 to 101-n), a power conditioning system 102 (102-1 to 102-n), a storage battery 103 (103-1 to 103-n), an inverter 104 (104-1 to 104-n) and a load 106 (106-1 to 106-n) in each customer facility 10 connected to the power management system of FIG. 1.

FIG. 7 shows an example of configuration of a power consumption estimation unit 1081 according to the first embodiment of the present invention.

FIG. 8 shows an example of configuration of a power consumption estimation pattern table defining a power consumption estimation pattern which is a combination of the weighting coefficient P and the tracking number n.

FIG. 9 shows an example of configuration of a power generation estimation unit 1082 according to the first embodiment of the present invention.

FIG. 10 shows an example of configuration of a power generation estimation pattern table defining a power generation estimation pattern which is a combination of the weighting coefficient a and the tracking number m.

FIG. 11 shows an autocorrelation coefficient of the power consumption over a long measurement period.

FIG. 12 is a diagram showing a change in power consumption over time, which is used to indicate a comparison of the results of the power consumption estimation between the estimate based on the estimation function of the present embodiment (equation (2) to calculate the estimated power consumption cs(t)) and the estimate based on the autoregressive model.

FIG. 13 is a diagram showing the results of comparison of accuracy between the estimation function of the present embodiment using the measured values of power consumption and the autoregressive model, as shown in FIG. 12.

FIG. 14 is a diagram showing a change in power consumption over time, which is used to indicate a comparison of the results of the power consumption estimation between the estimate based on the estimation function of the present embodiment (equation (2) to calculate the estimated power consumption cs (t)) and the estimate based on the autoregressive model.

FIG. 15 is a diagram showing the results of comparison of accuracy between the estimation function of the present embodiment using the measured values of power consumption and the autoregressive model, as shown in FIG. 14.

Fig. 16 is a flowchart showing an example of operation of the surplus power estimation process implemented by the surplus power estimation unit 108.

Fig. 17 is a flowchart showing an example of procedures implemented by the power management system 200 in response to the charge control.

Fig. 18 is a flowchart showing an example of procedures for the discharge control implemented by the power management system 200.

FIG. 19 shows an example of configuration of a power management system according to the second embodiment of the present invention.

FIG. 20 shows an example of configuration of a power management system 200' according to the second embodiment of the present invention.

FIG. 21 shows an example of configuration of electrical equipment possessed by one customer facility 10 according to the third embodiment of the present invention.

FIG. 22 shows an example of configuration of a power management system 200' adapted to power distribution control. Fig. 23 is a flowchart showing an example of procedures implemented by the power management system 200' according to the present embodiment of the present invention in response to the control of the output suppression.

EMBODIMENTS FOR CARRYING OUT THE INVENTION

<First embodiment>

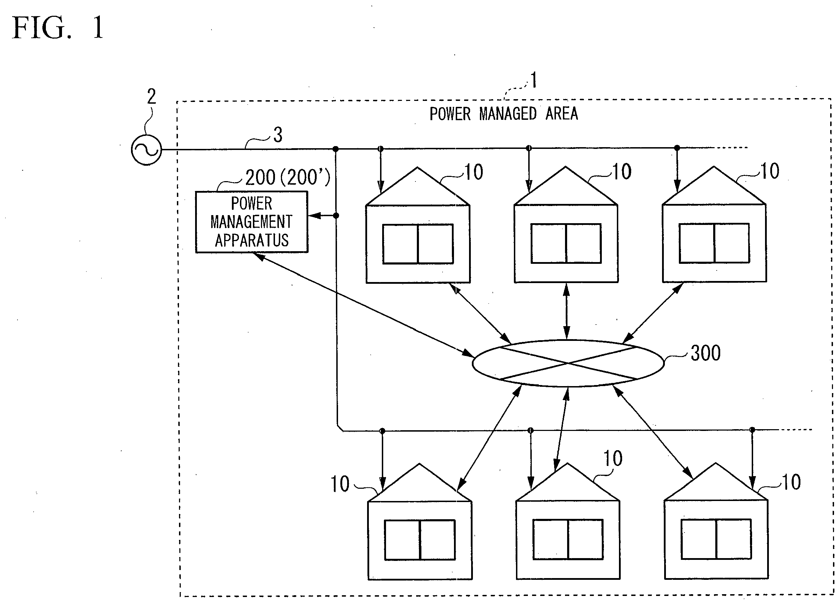

Hereinbelow, explanations are made with respect to the first embodiment of the present invention referring to the drawings. FIG. 1 shows an example of configuration of a power management system according to the first embodiment of the present invention. The power management system of this embodiment collectively manages the power in a plurality of customer facilities such as residential houses, commercial facilities and industrial facilities, which are located in a specific area. Such a power management system corresponds to what is referred to as TEMS (Town Energy Management System) or CEMS (Community Energy Management System).

The power management system of this embodiment performs power management with respect to electrical equipment provided in each of the plurality of customer facilities 10 in a specific area denoted as power managed area 1 in FIG. 1.

The customer facility 10 is, for example, any of residential houses, commercial facilities, and industrial facilities. In addition, the power managed area 1 in one embodiment may, for example, correspond to one or more housing complexes where each of the customer facilities 10 is a residential house in the housing complexes.

A customer facility 10 need not be limited to one located in the same area as the area where another customer facility similarly managed is located as long as it is managed by the power management system. That is, the power management system may include an assembly of a plurality of customer facilities 10 registered in different areas (e.g., various areas in Japan such as Hokkaido, Honshu, Kyushu and Shikoku as well as various areas in each of the United States, European countries, China, etc.) as long as such customer facilities are registered as customer facilities 10 under the control of the power management system, and the transmission and receipt of information to be managed via a network 300 to be described later are possible. In this case, the common system power supply 3 is an assembly of the power supply lines in the areas which are connected to the customer facilities 10 respectively.

The customer facilities 10 in the power managed area 1 shown in FIG. 1 include a customer facility 10 equipped with a photovoltaic module which is a power generator for generating electric power by using renewable energy. Further, the customer facilities 10 in the power managed area 1 include customer facility 10 equipped with a storage battery as electrical equipment. Such customer facilities 10 may include customer facility 10 having both of the photovoltaic module and the storage battery, or customer facility 10 having one of the photovoltaic module and the storage battery.

To the customer facilities 10 in the power managed area 1 when connected to the common system power supply 3, the powers branched off from the commercial power source 2 are supplied. Each of the customer facilities 10 can supply the power supplied from the system power supply 3 to the load. As a result, various electrical equipment (device) as a load can be operated.

Moreover, a customer facility 10 having a photovoltaic module (photovoltaic module 101 to be described later) can output the power generated by the photovoltaic module to the system power supply 3.

Further, a customer facility 10 having a storage battery (photovoltaic module 103 to be described later) can charge the power supplied from the system power supply 3 to the storage battery. Moreover, a customer facility 10 having a photovoltaic module and a storage battery can charge the storage battery with the power generated by the photovoltaic module.

Further, the power management system of the present embodiment is equipped with a power management apparatus 200.

The power management apparatus 200 performs power control with respect to electrical equipment provided in each of the plurality of customer facilities 10 belonging to the power managed area 1. Thus, the power management apparatus 200 in FIG. 1 is connected to the customer facilities 10 in mutually communicable manner via the network 300. Due to this feature, the power management apparatus 200 can control the electrical equipment provided in each of the plurality of customer facilities 10. In the embodiment shown in FIG. 1, the power management apparatus 200 is connected to the system power supply 3; however, the power management apparatus 200 may not be connected to the system power supply 3, for example, in the case where the customer facilities 10 are located in different areas. In this case, since the power management apparatus 200 and each customer facility 10 are connected via the network 300, the power management apparatus 200 is configured such that the information of the system power supply 3 to which the customers facility 10 is connected is obtained from the customer facility 10 via the network 300.

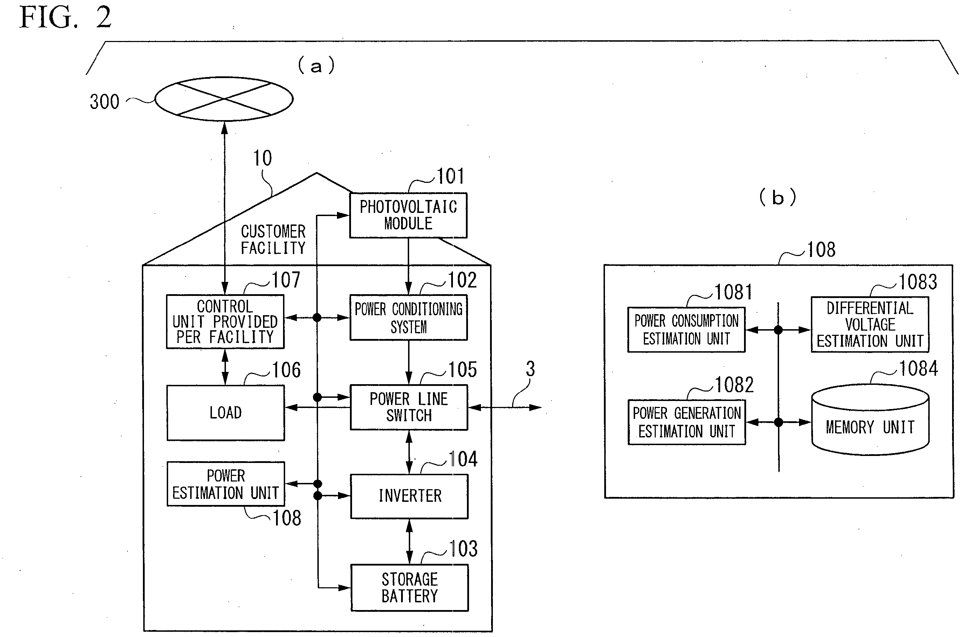

Next, explanations are made on an example of electrical equipment provided in one customer facility 10, referring to FIG. 2. FIG. 2 shows an example of configuration of electrical equipment provided in one customer facility 10. Here, FIG. 2(a) shows an example of configuration of electrical equipment provided in the customer facility 10. In this FIG. 2 (a), the customer facility 10 has, as electrical equipment, a photovoltaic module 101, a power conditioning system 102, a storage battery 103, an inverter 104, a power line switch 105, a load 106, a control unit 107 provided per facility and a power estimation unit 108. FIG. 2(b) shows an example of configuration of the power estimation unit 108 in FIG. 2(a). The power estimation unit 108 has a power consumption estimation unit 1081, a power generation estimation unit 1082, and a differential voltage estimation unit 1083 and a memory unit 1084.

The photovoltaic module 101 is one of the power generators utilizing sunlight as the renewable energy, and generates power by converting light energy into electricity by the photovoltaic effect. The photovoltaic module 101 is installed, for example, at a location where the sunlight is unlikely to be shielded at a side of a power generation element, such as a roof of the customer facility 10, whereby the sunlight can be efficiently converted into electric power.

The power conditioning system 102 is provided in correspondence with the photovoltaic module 101, and converts the direct current power output from the photovoltaic module 101 into an alternating current power with voltage and frequency corresponding to the specification of the power input of the load.

The inverter 104 is provided with respect to each of the storage batteries 103,and converts electricity charged to the storage battery 103 from alternating current to direct current or converts electricity discharged from the storage battery 103 from direct current to alternating current. That is, the inverter 104 performs bidirectional conversion of direct current/alternate current input to or output from the storage battery 103.

Specifically, when the storage battery 103 is charged, an alternating current power for charging is supplied to the inverter 104 from the commercial power supply 2 or the power conditioning system 102 via a power line switch 105. The inverter 104 converts the alternating current power thus supplied to a direct current power, and supplies the power to the storage battery 103.

Further, when the storage battery discharges, a direct current power is output from the storage battery 103. The inverter 104 converts the direct current power thus output from the storage battery 103 to an alternating current power, and supplies the power to the power line switch 105.

The power line switch 105 switches the power path in response to the control by the control unit 107 provided per facility. Here, the control unit 107 provided per facility can control the power line switch 105 in response to an instruction given by the power management system 200.

Due to the aforementioned control, the power line switch 105 can form a power path such that a power from the commercial power supply 2 is supplied to the load 106 in the same customer facility 10.

The power line switch 105 can also form a power path such that a power generated by the photovoltaic module 101 is supplied through the power conditioning system 102 to the load 106 in the customer facility 10.

The power line switch 105 can also form a power path such that a power supplied from one or both of the commercial power supply 2 and the photovoltaic module 101 is charged to the storage battery 103 through the inverter 104 in the customer facility 10.

The power line switch 105 can also form a power path such that a power output from the storage battery 103 by discharging is supplied through the inverter 104 to the load 106 in the same customer facility 10.

Further, the power line switch 105 can also form a power path such that a power generated in the photovoltaic module 101 is supplied through the power system of the commercial power supply 2 to the storage battery of another customer facility 10. Furthermore, the power line switch 105 can also form a power path such that a power output from the storage battery 103 by discharging is supplied to the load 106 in another customer facility 10.

The load 106 is constituted of at least one of a device, equipment etc. which consume electric power for their own operation in the customer facilities 10.

The control unit 107 provided per facility controls electric equipment (all of a part of the photovoltaic module 101, the power conditioning system 102, the storage battery 103, the inverter 104, the power line switch 105 and the load 106) in the customer facility 10.

The power management apparatus 200, which is already explained above, performs power control with respect to the electrical equipment provided in the entire customer facilities 10 belonging to the power managed area 1. For this purpose, the power management apparatus 200 is connected to each of the control units 107 provided in the respective customer facilities 10 in mutually communicable manner via the network 300. Due to this feature, the control unit 107 provided per facility can control the electrical equipment provided in each of the plurality of customer facilities 10 under its own control in response to the control by the power management apparatus 200.

Alternatively, the control unit 107 provided per facility may be omitted and the power management apparatus 200 may directly control the electrical equipment provided in each of the plurality of customer facilities 10. However, with the configuration including the power management apparatus 200 and the control unit 107 provided per facility as in the present embodiment, the control of the power management apparatus 200 can be prevented from becoming complex by stratifying the targets of control into different levels, i.e., the power managed area 1 on the whole and the consumer facilities 10.

Further, as described above, some of the customer facilities 10 in the power managed area 1 may not be equipped with the photovoltaic module 101, the storage battery 103, the inverter 104, etc.

Here, for example, in the daytime, power is generated by the photovoltaic module 101. However, for example, in the case where only a small number of people are present in the customer facility 10, the power consumption by the load 106 becomes considerably small. In such a case, the total amount of power generated by the photovoltaic modules 101 present in the entire power managed area 1 may exceed the total amount of power required by the loads 106 present in the entirety of the same power managed area 1. In such a case, even if the power generated by the photovoltaic modules 101 present in the entire power managed area 1 is supplied to the loads 106 present in the entire power managed area 1, a surplus occurs in the power generated by the photovoltaic modules 101 present in the entire power managed area 1.

For effectively utilizing the surplus power thus occurred, it is preferable that the surplus power is charged to and stored in the storage batteries 103 installed in the power managed area 1.

However, the surplus power of the photovoltaic module 101 generated as described above varies depending on, for example, the daily sunshine conditions.

For example, when the surplus power is small, the power to be stored in the storage battery 103 also becomes small. However, the inverter 104 has a characteristic that it maintains high efficiency when the power is at or above a certain level, but notably loses efficiency when the power is below that level.

For this reason, if a small surplus power from each photovoltaic module 101 in the power managed area 1 is distributed and charged to, for example, the storage battery 103 of each consumer facility 10, the power of each inverter 104 becomes considerably small. In this case, the power loss of each inverter 104 will greatly increase.

Even if the surplus power from the photovoltaic module 101 is individually charged to the storage battery 103 for each customer facility 10, the above-described problem occurs all the same. The problem of the power loss in the inverter 104 also arises even when the power discharged from the storage battery 103 for supplying the power to the load 106 in the power managed area 1 is small.

For performing the charging or discharging of the storage batteries 103 of the customer facilities 10 in the power managed area 1 while taking the aforementioned problem into account, as described below, the power management apparatus 200 of the present embodiment combines the surplus power from the whole customer facilities 10 in the power managed area 1 and controls the charging and discharging operations of the storage batteries 103 of given customer facilities 10 while attempting to reduce the power loss of the inverter 104.

That is, the control of the charging and discharging operations of the storage batteries 103 described later involves distribution of the charging power from the photovoltaic module 101 to the storage battery 103 in the power managed area 1, or distribution of the power from the storage battery 103 to the load 106. For this reason, the control of the charging and discharging operations with respect to the storage batteries 103 described below is also referred to as "power distribution control".

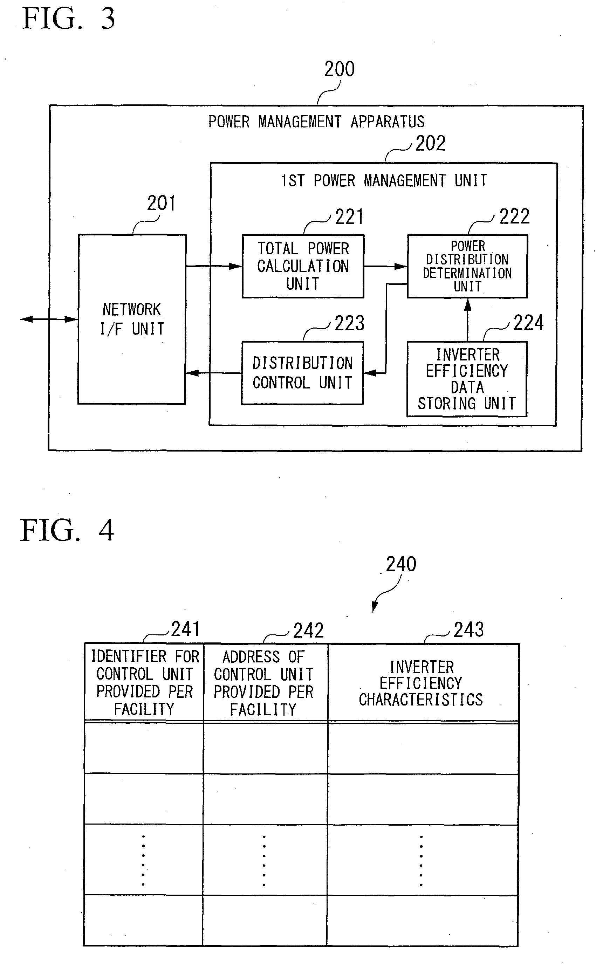

Next, explanations are made on an example of configuration of a power management apparatus 200 adapted to the power distribution control, referring to FIG. 3. FIG. 3 is a diagram showing an example of configuration of a power management apparatus 200 adapted to the power distribution control according to the first embodiment. The power management apparatus 200 has a network I/F unit 201 and a first power management unit 202 which are adapted to the power distribution control.

The network I/F unit 201 allows exchange of various data between control units 107 of respective customer facilities 10 via the network 300.

The first power management unit 202 (an example of the power management unit adapted to the customer facilities) executes a prescribed power management for the electric equipment in a plurality of the customer facilities 10 in the power managed area 1.

The power management executed by the first power management unit 202 in the present embodiment is the above-described power distribution control for reducing the loss at the inverter 104 for each customer facility 10.

The first power management unit 202 shown in FIG. 3 includes a total power calculation unit 221, a power distribution determination unit 222, a distribution control unit 223, and an inverter efficiency data storing unit 224.

The total power calculation unit 221 calculates the total power (total charge power) to be charged to a group of the storage batteries 103 in the power managed area 1 or the total power (total discharge power) to be discharged from a group of the storage batteries 103 in the power managed area 1. Hereinbelow, when the total charge power and the total discharge power need not be distinguished from each other, these are collectively referred to as the "total power".

The power distribution determination unit 222 selects at least one storage battery 103 as the distribution target of the total power from among the storage batteries 103 of the plurality of customer facilities 10 based on the respective inverter efficiency characteristics of the inverters 104. In addition to this, the power distribution determination unit 222 also determines power to be distributed for each storage battery 103 of the customer facility 10 as the determined distribution target.

The distribution control unit 223 performs control such that the determined distribution power is distributed to each storage battery 103 of the customer facility 10 as the distribution target.

The inverter efficiency data storing unit 224 stores in advance the inverter efficiency characteristics of each inverter 104 used by the power distribution determination unit 222. In other words, the inverter efficiency data storing unit 224 stores the inverter efficiency characteristics of each inverter 104 provided in the power managed area 1.

One inverter efficiency characteristic shows the variation characteristic of the efficiency dependent on the power with respect to the corresponding inverter 104. Further, the inverter efficiency data storing unit 224 stores inverter efficiency characteristics of each inverter 104 in the power managed area 1 in the inverter efficiency data table.

FIG. 4 is a diagram showing an example of configuration of an inverter efficiency data table 240 stored in an inverter efficiency data storing unit 224.

One record in the inverter efficiency data table 240 shown in FIG. 4 corresponds to one inverter 104. Each record includes an identifier 241 for control unit provided per facility, an address 242 of control unit provided per facility, and inverter efficiency characteristics 243.

The identifier 241 for control unit provided per facility is an identifier for the control unit 107 provided per facility that places the corresponding inverter 104 under control.

The address 242 of control unit provided per facility is an address of the control unit 107 provided per facility that is identified by identifier 241 for control unit provided per facility in the same record.

The inverter efficiency characteristics 243 indicate the inverter efficiency characteristics of the corresponding inverter 104.

Thus, since the inverter efficiency characteristics 243 are associated with the identifier 241 for control unit provided per facility, it is possible to identify the inverter 104 corresponding to the inverter effciency characteristics 243. Further, the address 242 of control unit provided per facility is used, for example, for communicating with the control unit 107 provided per facility that manages a storage battery 103 when the distribution control unit 223 controls the power for charge or discharge of the storage battery 103.

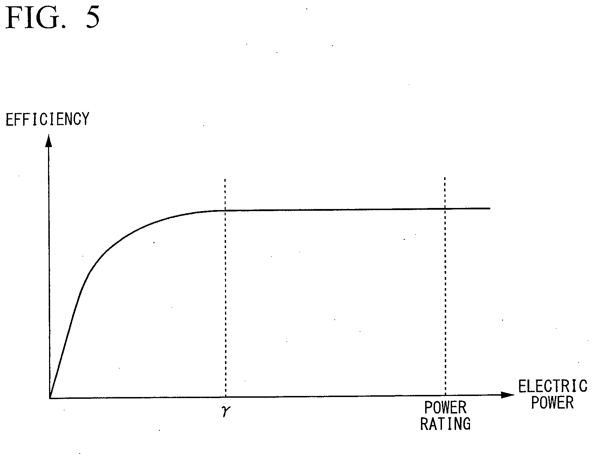

FIG. 5 shows an example of inverter efficiency characteristics of an inverter 104. In FIG. 5, the horizontal axis represents the input power, and the vertical axis represents the efficiency of the AC-DC conversion of the inverter 104. As can be understood from FIG. 5, the inverter 104 maintains high efficiency in a power range of from the rated power to the threshold value $\gamma$, but the efficiency thereof tends to decrease as the power decreases from the threshold value $\gamma$.

Each of the inverters 104 tends to show the same characteristic as shown in FIG. 5. However, the parameters such as the rated power, the efficiency at the rated power and the threshold value $\gamma$ vary depending on the manufacturer, model etc. of the inverter 104. The inverter efficiency characteristics 243 respect such different characteristics of the respective inverters 104. Further, the characteristics as shown in FIG. 5 are those shown at the time of charging the storage battery 103 (during the AC-DC conversion) or discharging from the storage battery 103 (during the DC-AC conversion); however, the inverter efficiency characteristics 243 in the present embodiment include the characteristics shown at the time of both of the charging and the discharging.

Next, explanations are made on an example of the control in the case where the power management apparatus 200 charges a group of storage batteries 103 in the power managed area 1 as the power distribution control. The example taken here is the case where the power generated by a group of photovoltaic modules 101 in the power managed area 1 is supplied to a group of the loads 106, and a surplus power obtained by subtracting the power supplied to the loads from the generated power is charged to a group of the storage batteries 103.

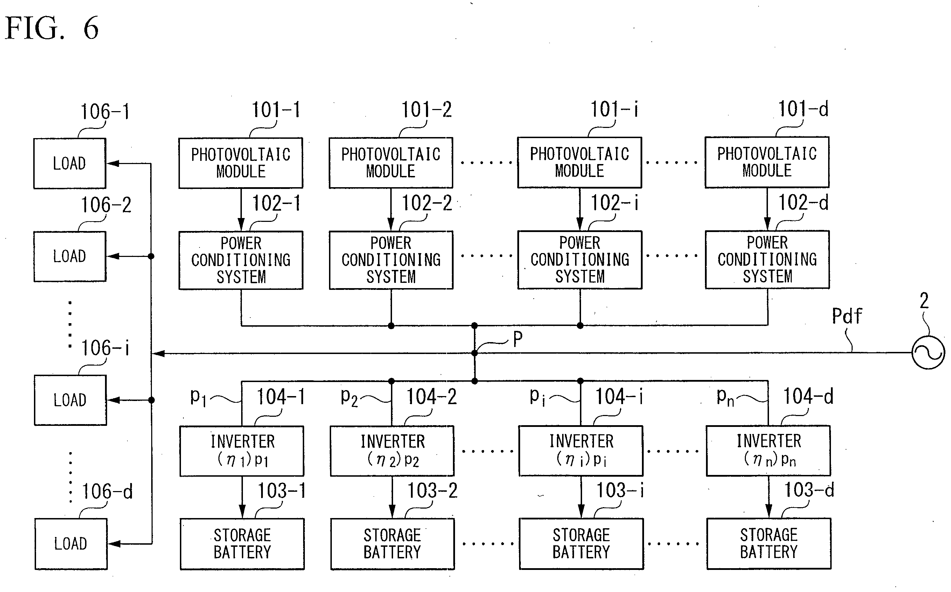

FIG. 6 is a schematic view of a power system between a photovoltaic module 101 (101-1 to 101-d), a power conditioning system 102 (102-1 to 102-d), a storage battery 103 (103-1 to 103-d), an inverter 104 (104-1 to 104-d) and a load 106 (106-1 to 106-d) in each customer facility 10 connected to the power management system of FIG. 1.

In the example of FIG. 6, the photovoltaic module 101, the power conditioner 102, the storage battery 103, the inverter 104, and the load 106 are present in the same number, n. This, however, is merely an example, and the numbers of the photovoltaic module 101, the power conditioner 102, the storage battery 103, the inverter 104 and the load 106 may be different from each other.

Next, explanations are made on an outline of the charge control for a group of storage batteries 103 executed by the power management apparatus 200 in the present embodiment, referring to FIG. 6.

In this case, the DC powers generated by the photovoltaic modules 101-1 to 101-d are converted into the AC powers by the power conditioners 102-1 to 102-d, respectively, and supplied to the corresponding loads 106-1 to 106-n.

At this time, when the total of AC powers output from the power conditioners 102-1 to 102-d is larger than the total of powers demanded by the loads 106-1 to 106- d, the difference between the total values is a total (total power) p of the surplus powers from the group of photovoltaic modules 101.

When it is intended to charge the surplus power from the photovoltaic modules 101 to the storage batteries 103, the total power calculation unit 221 in the power management apparatus 200 may calculate the total power p, which is the total of the surplus powers as described above, as the estimated surplus power. On the other hand, when it is intended to supply power to each of the loads 106 which is larger than the power generated by the photovoltaic module 101 and to discharge from the storage battery 103, similarly, the total power calculation unit 221 may calculate the total power p (negative value when discharge is needed) which is the total of the surplus powers.

In this case, when the total power p is smaller than a certain threshold, distributing the whole of the total power p to all the storage batteries 103-1 to 103-n results in causing the inverters 104-1 to 104-d to operate with power below the threshold value γ, thereby increasing the power loss.

Therefore, in order to suppress the power loss at the inverter 104, the power management apparatus 200 of the present embodiment determines the storage battery 103 to be charged, for example, as described below.

That is, the power distribution determination unit 222 in the power management apparatus 200 refers to the inverter efficiency data table 240 stored in the inverter efficiency data storing unit 224 and recognizes the relationship between the efficiency (power loss) of each inverter and the power. Then, from the storage batteries 103-1 to 103-d, for example, one or more storage batteries 103 that, when the total power p is distributed, can be charged with a power such that the loss at the inverter 104 does not exceed a certain level (i.e., the efficiency is at or above a certain level) are selected as the charge target. At this time, the ratio of portions of the total power p to be distributed and charged to (or discharged from) the respective storage batteries 103 to be charged (or to discharge) is also determined.

Then, the distribution control unit 223 controls the storage battery 103 as the distribution target such that the distribution power determined as described above is charged to the selected storage battery 103.

Specifically, the control units 107 of the customer facilities 10 including the storage batteries 103 as the distribution target are instructed by the distribution control unit 223 to respectively distribute powers determined by the power distribution determination unit 222. Each of the control units 107 provided per facility controls the storage battery 103 in the customer facility 10 such that the instructed distribution power is charged.

Here, the algorithm for determining the storage batteries 103 as the distribution target and the distribution power for each of the storage batteries 103 as the distribution target which is executed by the power distribution determination unit 222 of the first embodiment may be, for example, a process to obtain "i" and "pi" that minimize the loss L in the function represented by the following equation (1).

The loss L in the following equation (1) indicates the total of the losses of the inverters 104-1 to 104-d. Further, $\eta_i(p_i)$ represents the efficiency $\eta_i$ at the distributed power $p_i$ in the inverter efficiency characteristics of the i-th inverter 104-i ($1 \leqq i \leqq d$). Further, $w_i$ represents the power rating in the inverter efficiency characteristics of the i-th inverter 104-i.

$$L = \sum_{i=1}^{n}\left[\left(1 - \eta_i(p_i)\right) \times p_i\right] \qquad \cdots (1)$$

Constraint

$$p = \sum_{i=1}^{n} p_i \quad , \quad 0 \leq p_i \leq w_i$$

Next, explanations are made on a calculation method for estimating the total power p as the surplus power from the customer facilities 10. The calculation for this estimation is performed by the power estimating unit 108 shown in FIG. 2 (b).

The power consumption estimation unit 1081 has, for example, a configuration of an FIR (Finite Impulse Response) filter which is a digital filter, and estimates the value of the power consumption in the control period including the next measurement period from the power consumption in the latest past measurement period. For example, the measurement period is set as every 1 minute, and the control period is set as a time interval of 1 minute or a time interval which exceeds 1 minute and is longer than the measurement period. Concerning the present embodiment, explanations are made taking an FIR filter as an example; however, it is also possible to use any other filters such as an infinite impulse response (IIR) filter and an adaptive filter that are digital filters other than an FIR filter, as long as estimated values (estimated power generation and estimated power consumption) in the next measurement period can be obtained from the past measurement period.

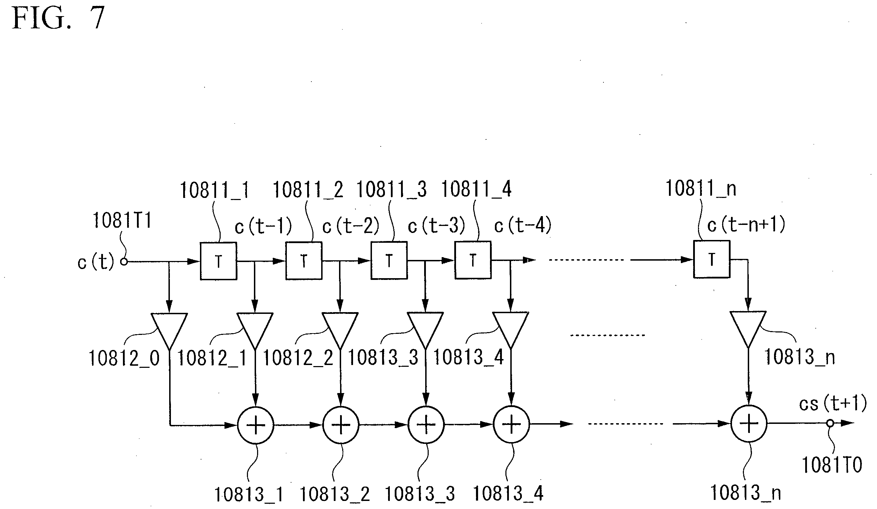

FIG. 7 is a diagram showing an example of configuration of a power consumption estimation unit 1081 according to the first embodiment of the present invention.

The power consumption estimation unit 1081 has a delay unit 10811_1, a delay unit 10811_2, a delay unit 10811 3, a delay unit 10811_4 ... a delay unit 10811_n-1; a coefficient multiplication unit 10812_0, a coefficient multiplication unit 10812_1, a coefficient multiplication unit 10812_2, a coefficient multiplication unit 10812_3, a coefficient multiplication unit 10812_4 ... a coefficient multiplication unit 10812_n-1; and an addition unit 10813_1, an addition unit 10813_2, an addition unit 10813_3, an addition unit 10813_4 ... an addition unit 10813_n-1. With this configuration, the power consumption estimating unit 1081 calculates the estimated power consumption cs(t + 1) in the next measurement period from the power consumption c(t) input chronologically for each measurement period according to the following equation (2).

$$c(t+1) = w1(0)c(t) + w1(1)c(t-1) + w1(2)c(t-2) + \cdots w1(n-1)c(t-n+1)$$
$$\cdots (2)$$

In this equation (2), n is a tracking number, that is, the number of consecutive power consumptions c(t) in the periods of from the current measurement period to the past measurement periods (for example 1 minute) including the latest measurement period (i.e., the number of latest limited period of past measurement), which are used for estimation. In the equation (2), n is an integer of 0 or more. In the equation (2), c(t - n) is a power consumption measured in a measurement period which proceeds the current measurement period by n period(s). Here, when n = 0 in c(t - n), c(t) is a power consumption measured in the current measurement period.

Here, the delay unit 10811_1, the delay unit 10811_2, the delay unit 10811_3, the delay unit 10811_4 ... the delay unit 10811_n - 1 sequentially shift the data of the power consumption c(t) values input from the input terminal 1081TI in the measurement periods in the direction of from the input terminal 1081TI to the output terminal 1081 TO at the timing of input of the power consumption c(t) to the input terminal 1081TI.

The coefficient multiplication unit 10812_0 multiplies the value of the weight function w1(q) corresponding to the power consumption c(t). The coefficient multiplication unit 10812_1 multiplies the value of the weight function w1(q) corresponding to the power consumption c(t - 1). The coefficient multiplication unit 10812_2 multiplies the value of the weight function w1(q) corresponding to the power consumption c(t - 2). The coefficient multiplication unit 10812 multiplies the value of the weight function w1(q) corresponding to the power consumption c(t - 3). The coefficient multiplication unit 10812_4 multiplies the value of the weight function w1(q) corresponding to the power consumption c(t - 4). The coefficient multiplication unit 10812_n - 1 multiplies the value of the weight function w1(q) corresponding to the power consumption c(t - (n - 1)).

The aforementioned weight function w1(q) is expressed by the following equation (3). In the equation (3), β is a weight coefficient. Further, n is a tracking number as already described above. Each q in the weight function w1(q) is set as a value corresponding to n in each term of the time (t - n) at which the weight function w1(q) is multiplied.

$$w1(q) = 2q(1-\beta)/(n(n-1)) + \beta/n \qquad \cdots (3)$$

wherein β is a weight coefficient, n is a tracking number, and q is an order of weight function.

The weight function w(r) shown in the equation (3) provides a weight coefficient corresponding to the power generation by the photovoltaic module, the load, etc. instead of a simple moving average, and hence makes it possible to improve the estimation accuracy of the estimated power consumption cs (t) estimated by the equation (2).

For example, in the case where n = 3 and β = 2 in each of the equations (2) and (3), each of the equations (2) and (3) becomes as follows.

The equation (2) with n = 3 is:

$$cs(t + 1) =$$

$$w1(0)c(t) + w1(1) \cdot c(t - 1) + w1(2) \cdot c(t - 2)$$

Here, the equation (3) with n = 3 is:

$$w1(q) = 2q(1 - \beta)/(n \cdot (n - 1)) + \beta/n$$

$$= (q(1 - \beta) + \beta)/3$$

Further, in the equation (3) with β = 2,

$$w1(0) = 2/3 = 0.6666 ..., q = 0$$

$$w1(1) = (-1 + 2)/3 = 0.3333 ..., q = 1$$

$$w1(2) = (-2 + 2)/3 = 0, q = 2.$$

Therefore, when n = 3 and β = 2, the equation (2) is:

$$cs(t + 1) = 0.667 \cdot c(t) + 0.333 \cdot c(t - 1).$$

Each of the weight coefficient β and the tracking number n described above is obtained in advance by experiment as a predetermined numerical value corresponding to the operation conditions such as the season and the day of the week, and the like.

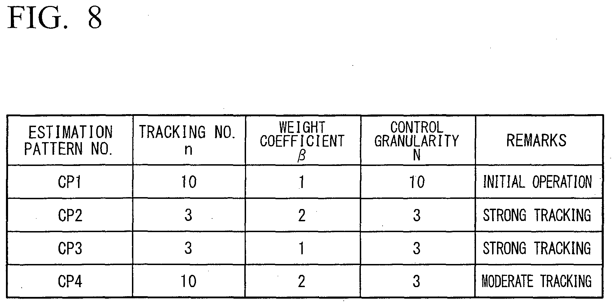

FIG. 8 is a diagram showing an example of configuration of a power consumption estimation pattern table defining a power consumption estimation pattern which is a combination of the weighting coefficient β and the tracking number n. The power consumption estimation pattern table is written and stored in advance in the storage unit 1084. In FIG. 8, for each power consumption estimation pattern, the estimation pattern number, the tracking number n, the weight coefficient β, the control granularity N, and the remarks are correspondingly written and stored.

The estimation pattern number is identification information for identifying each of the power consumption estimation patterns in the power consumption estimation pattern table. The control granularity N indicates the control period, and the numerical value described is the number of measurement period. The power consumption estimation unit 1081 outputs the estimated power consumption cs(t + 1) of the measurement period corresponding to the timing of initiating the next control period as the estimated power consumption of the next control period.

That is, since the control granularity is 10 in the power consumption estimation pattern of the estimation pattern number CP1, the control period has a length of 10 measurement periods, so that the output of the estimated power consumption cs(t) is performed every 10 measurement periods. The column of remarks indicates the sensitivity with respect to the latest change in power consumption which depends on whether the latest change in power consumption in the estimation is strongly reflected or weakly reflected.

The power consumption estimation pattern described above can be more appropriately selected in view of the season, the day of the week, the time in a day, or the like, to thereby further improve the estimation accuracy of the estimated power generation.

The calculation of the estimated power consumption cs(t + 1) performed by the above-described power consumption estimation unit 1081 may be configured by a hardware or may be configured as a software application.

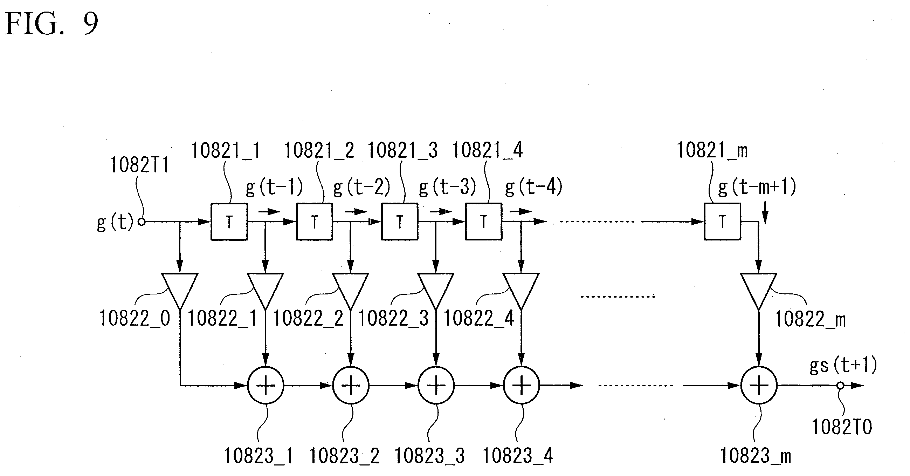

FIG. 9 is a diagram showing an example of configuration of a power generation estimation unit 1082 according to the first embodiment of the present invention.

The power generation estimation unit 1082 has a delay unit 10821_1, a delay unit 10821_2, a delay unit 10821_3, a delay unit 10821_4 ... a delay unit 10821_m-1; a coefficient multiplication unit 10822_0, a coefficient multiplication unit 10822_1, a coefficient multiplication unit 10822_2, a coefficient multiplication unit 10822_3, a coefficient multiplication unit 10822_4 ... a coefficient multiplication unit 10822_m-1; and an addition unit 10823_1, an addition unit 10823_2, an addition unit 10823_3, an addition unit 10823_4 ... an addition unit 2323_m-1. With this configuration, the power generation estimation unit 1082 calculates the estimated power generation gs(t + 1) in the next measurement period from the power generation g (t) input chronologically for each measurement period according to the following equation (4).

$$g(t+1) = w2(0)g(t) + w2(1)g(t-1) + w2(2)g(t-2) + \cdots w2(n-1)g(t-m+1)$$

$$\cdots (4)$$

In this equation (4), m is a tracking number, that is, the number of consecutive power generations g(t) in the periods of from the current measurement period to the past measurement periods (for example 1 minute) including the latest measurement period (i.e., the number of latest limited period of past measurement), which are used for estimation. In the equation (4), m is an integer of 0 or more. In the equation (4), g(t - m) is a power generation measured in a measurement period which proceeds the current measurement period by m period(s). Here, when m = 0 in g(t - m), g(t) is a power generation measured in the current measurement period.

Here, the delay unit 10821_1, the delay unit 10821_2, the delay unit 10821_3, the delay unit 10821_4 ... the delay unit 10821_m - 1 sequentially shift the data of the power generation g(t) values input from the input terminal 1082TI in the measurement periods in the direction of from the input terminal 1082TI to the output terminal 1082TO at the timing of input of the power generation g(t) to the input terminal 1082TI.

The coefficient multiplication unit 10822_0 multiplies the value of the weight function w2(r) corresponding to the generated power g(t). The coefficient multiplication unit 10822_1 multiplies the value of the weight function w2(r) corresponding to the generated power g(t - 1). The coefficient multiplication unit 10822_2 multiplies the value of the weight function w2(r) corresponding to the generated power g(t - 2). The coefficient multiplication unit 10822_3 multiplies the value of the weight function w2(r) corresponding to the generated power g(t - 3). The coefficient multiplication unit 10822_4 multiplies the value of the weight function w2(r) corresponding to the generated power g(t - 4). The coefficient multiplication unit 10822_n - 1 multiplies the value of the weight function w2(r) corresponding to the generated power g(t - (n - 1)).

The aforementioned weight function w2(r) is expressed by the following equation (5). In the equation (5), a is a weight coefficient. Further, m is a tracking number as already described above. Each r in the weight function w2(r) is set as a value corresponding to m in each term of the time (t - m) at which the weight function w2(r) is multiplied.

$$W2(r) = 2r(1-\alpha)/(m(m-1)) + \alpha/m \qquad \cdots (5)$$

wherein a is a weight coefficient, m is a tracking number, and r is an order of weight function.

The weight function w2(r) shown in the equation (5) provides a weight coefficient corresponding to the power generation by the photovoltaic module, the load, etc. instead of a simple moving average, and hence makes it possible to improve the estimation accuracy of the estimated power generation gs(t) estimated by the equation (4).

For example, in the case where m = 3 and a = 2 in each of the equations (4) and (5), each of the equations (4) and (5) become as follows.

The equation (4) with m = 3 is:

$$gs(t + 1) =$$

$$w2(0)g(t) + w2(1) \cdot g(t - 1) + w2(2) \cdot g(t - 2)$$

The equation (5) with m = 3 is:

$$w2(r) = 2r(1 - \alpha)/(m \cdot (m - 1)) + \alpha/m$$

$$= (r(1 - \alpha) + \alpha)/3$$

Further, in the equation (5) with a = 2,

$$w2(0) = 2/3 = 0.6666..., r = 0$$

$$w2(1) = (-1 + 2)/3 = 0.3333..., r = 1$$

$$w1(2) = (-2 + 2)/3 = 0, r = 2$$

Therefore, when n = 3 and a = 2, the equation (4) is:

$$gs(t + 1) = 0.667 \cdot g(t) + 0.333 \cdot g(t - 1)$$

The power generation estimation pattern including the weight coefficient a and the tracking number m described above is obtained in advance by experiment as a predetermined numerical value corresponding to the operation conditions such as the season and the day of the week, and the like.

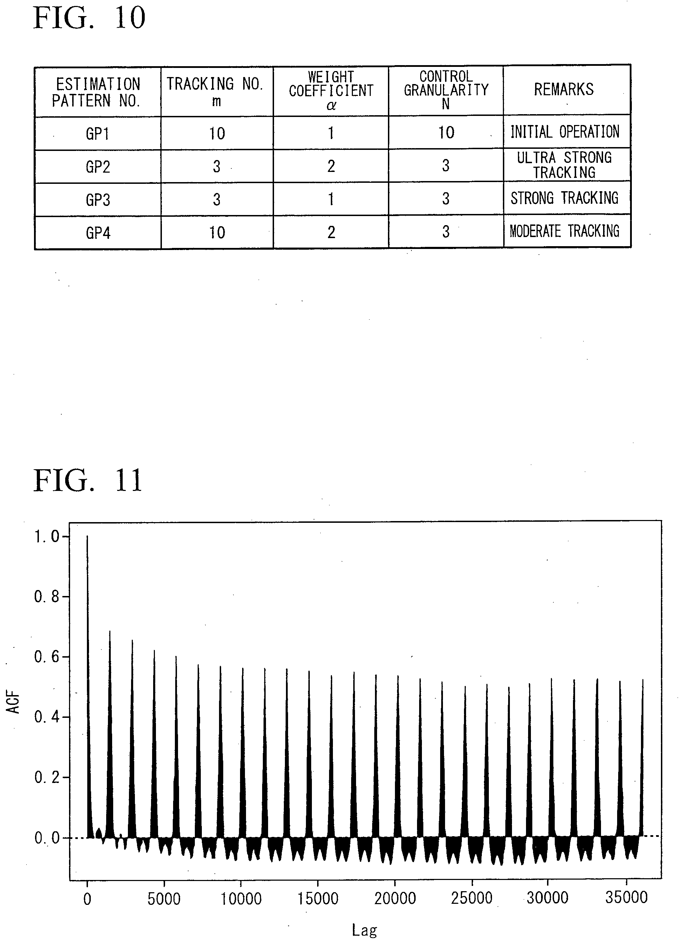

FIG. 10 is a diagram showing an example of configuration of a power generation estimation pattern table defining a power generation estimation pattern which is a combination of the weighting coefficient a and the tracking number m. The power generation estimation pattern table is written and stored in advance in the memory unit 1084. In FIG. 10, for each power generation estimation pattern, the estimation pattern number, the tracking number m, the weight coefficient a, the control granularity N, and the remarks are correspondingly written and stored.

The estimation pattern number is identification information for identifying each of the power generation estimation patterns in the power generation estimation pattern table. The control granularity N indicates the number of measurement period in the control period as explained for FIG. 8. The power generation estimation unit 1082 outputs the estimated power generation gs(t + 1) of the measurement period corresponding to the timing of initiating the next control period as the estimated power generation of the next control period.

That is, since the control granularity is 10 in the power generation estimation pattern of the estimation pattern number GP1, the control period has a length of 10 measurement periods, so that the output of the estimated power generation gs(t) is performed every 10 measurement periods. The column of remarks indicates the sensitivity with respect to the latest change in power generation which depends on whether the latest change in power generation in the estimation is strongly reflected or weakly reflected.

The power generation estimation pattern described above can be more appropriately selected in view of the season, the day of the week, the time in a day, or the like, to thereby further improve the estimation accuracy of the estimated power generation.

Further, the granularity N is set appropriately so as to correspond to the delay of control with respect to the speed of data communication via the network 300 which is an information communication network, the time needed to control the charging and discharging in each customer facility 10, or the like. When the delay is small, the granularity N is decreased, whereas when the delay is large, the granularity N is increased.

At the timing of the control period, the differential voltage estimation unit 1083 subtracts the estimated power consumption cs(t + 1) obtained by the power consumption estimation unit 1081 from the estimated power generation gs(t + 1) obtained by the power generation estimation unit 1082, to calculate the estimated surplus power ps(t + 1).

This estimated surplus power ps(t + 1) is used in the next control period as the total power p which is the surplus power, whereby the distribution control unit 223 controls the power for charging or discharging each of the storage batteries 103 of the customer facilities 10.

] Each of the calculation of the estimated power generation gs(t + 1) performed by the above-described power generation estimation unit 1082 and the calculation of the estimated surplus power ps(t + 1) performed by the above-described differential voltage estimation unit 1083 may be configured by a hardware or may be configured as a software application.

In the present embodiment, the power estimation unit 108 is the electric facility provided in the customer facility 10, but the system of the present invention may have a configuration wherein the power estimation unit 108 is provided in the power management apparatus 200 instead of being provided in each customer facility 10.

In this configuration, the respective parts of the power estimation unit 108 calculate the estimated power consumption cs(t + 1) and the estimated power generation gs(t + 1) from the measured values (power consumption c(t) and power generation g(t)) for each customer facility 10, so as to obtain the estimated surplus power ps(t + 1) for each customer facility 10. Then, the total power calculation unit 221 adds up the values of the estimated surplus power ps(t + 1) obtained with respect to the consumer facilities 10 to calculate the total power p in the power managed area 1.

Further, the system of the present invention may be configured to add up the measured values supplied from the customer facilities 10 so as to obtain each of the estimated power consumption cs(t + 1) and the estimated power generation gs(t + 1) of the entire consumer facilities 10 in the power managed area 1 all at once, and to subtract the obtained estimated power generation gs(t + 1) of the power managed area 1 from the obtained estimated power consumption cs(t + 1) in the power managed area 1 so as to obtain the estimated surplus power ps(t + 1) as the total power p of the power managed area 1. In this case, the total power calculation unit 221 obtains the total power p from the power estimation unit 108. Here, the calculations to obtain the sum of the power generation g(t) and the sum of the power consumption c(t) supplied from the customer facilities 10 are performed by the power generation estimation unit 1082 and the power consumption estimating unit 1081, respectively.

Further, the respective parts of the power estimation unit 108 may be configured to calculate the estimated power consumption cs(t + 1) and the estimated power generation gs(t + 1) for each group of the customer facilities 10 from the measured values (power consumption c(t) and power generation g(t)) in each group of the customer facilities 10, so as to obtain the estimated surplus power ps(t + 1) for each customer facility 10 in the group. Then, the total power calculation unit 221 adds up the values of the estimated surplus power ps(t + 1) obtained with respect to the consumer facilities 10 in the group to calculate the total power p for each of the groups.

Further, the system of the present invention may be configured to add up the measured values supplied from each group of the customer facilities 10 so as to obtain each of the estimated power consumption cs(t + 1) and the estimated power generation gs(t + 1) of the entire consumer facilities 10 in each group all at once, so as to obtain the total power p for each group of the customer facilities 10. The power estimation unit 108 may be configured so that the customer facilities 10 constituting the aforementioned group are arbitrarily selected as necessary at the time of performing the estimation. In this case, the total power calculation unit 221 obtains the total power p from the power estimation unit 108. Here, the calculations to obtain the sum of the power generation g(t) and the sum of the power consumption c(t) supplied from the customer facilities 10 are performed by the power generation estimation unit 1082 and the power consumption estimating unit 1081, respectively.

Hereinbelow, the accuracy of the estimation of the estimated surplus power in the present embodiment is explained.

FIG. 11 is a diagram showing an autocorrelation coefficient of the power consumption over a long measurement period. In FIG. 11, the horizontal axis shows the elapsed time (minutes) from the initiation time, 0 minute (t = 0), of the measurement as the measurement period, and the vertical axis shows the autocorrelation function (ACF). The autocorrelation coefficient in FIG. 11 is an index showing the degree of similarity of the measurement values of the power consumption measured at each time to the measurement value of the power consumption measured at t = 0. Since the autocorrelation coefficient at t = 0 is a measured value of the constant power consumption, the coefficient is naturally "1". As the time elapses from t = 0, the autocorrelation coefficient decreases, but as shown in FIG. 11, the autocorrelation coefficient may show a pattern peculiar to the period in some cases.

In the case of the autocorrelation coefficient of the power consumption over the time as shown in FIG. 11, it is observed that the fluctuation of the coefficient becomes mild after the elapse of 1 minute to 4 minutes, and the similarity between the coefficients of the nearest times is high.

When the autoregressive model of FIG. 11 is generated,

$$gs(t \ + \ 1) = \ 0.9776 \cdot g(t) + 27.95233.$$

From this, it is understood that, in the case of the long-term power consumption of FIG. 11, the immediately preceding g(t) becomes dominant and the estimated power consumption with high correlation can be obtained by estimation using the data of the power consumption of immediately preceding time (1 minute earlier). However, when the autoregressive model is created using the long-term power consumption, the autoregressive model with using the latest measured value obtained in the vicinity of the time for estimation cannot be adjusted to the change of the environment or the like, whereby the most appropriate value cannot be obtained.

On the other hand, in the present embodiment, the estimated power consumption c(t + 1) and the estimated power generation g(t + 1) are obtained from a plurality of measured values at times in the past estimated by equations (2) and (4); therefore, even in the event of change of the environment or the like, it is possible to follow this change, and the most appropriate value can be obtained.

Hereinbelow, a comparison of the results of the power consumption estimation between the estimation based on the estimation function of the present embodiment and the estimation based on the autoregressive model is described.

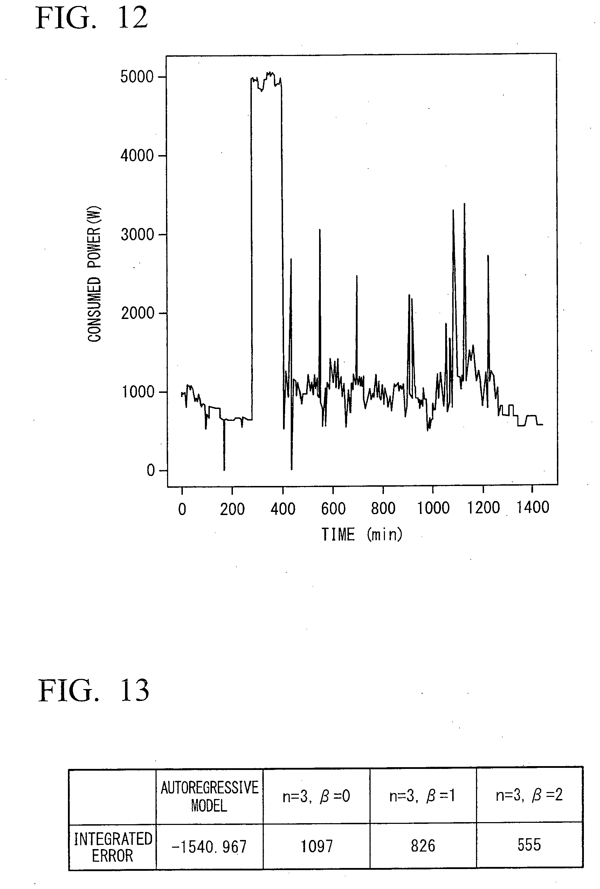

FIG. 12 is a diagram showing a change in power consumption over time, which is used to indicate a comparison of the results of the power consumption estimation between the estimate based on the estimation function of the present embodiment (equation (2) to calculate the estimated power consumption cs(t)) and the estimate based on the autoregressive model. In FIG. 12, the horizontal axis shows the time (minutes) and the vertical axis shows the measured power consumption (W: watt). As the autoregressive model, the regression equation shown above is used.

As a comparison between the estimation function of the present embodiment and the autoregressive model, with using the power consumption data of FIG. 12 sequentially in chronological order, a difference is obtained between the estimated power consumption values at the respective times and the consumed power values measured at the times at which the estimated power consumption values are obtained. Then, using the obtained difference as an error, an integration is performed for all the times for which the comparison is made between the estimated power consumption values and consumed power values for estimating this error.

It is considered that the larger the absolute value of the integrated value (integrated error) as a result of this integration, the worse the accuracy of estimation.

FIG. 13 is a diagram showing the results of comparison of accuracy between the estimation function of the present embodiment using the measured values of power consumption and the autoregressive model, as shown in FIG. 12.

In FIG. 13, the integrated error in the case of using the autocorrelation model is "-1540.967". Further, when the estimation function (equation (2)) of the present embodiment is used, the integrated error is "1097" when n = 3 and $\beta$ = 0, "826" when n = 3 and $\beta$ = 1, and "555" when n = 3 and $\beta$ = 2.

Therefore, as compared to the integrated error of "-1540.967" in the case of using the autocorrelation model, the integrated error in the case of using the worst estimation function of the present embodiment where n = 3 and $\beta$ = 0 is "1097", from which it is understood that the estimation function of the present embodiment is higher in the estimation accuracy than the autocorrelation model.

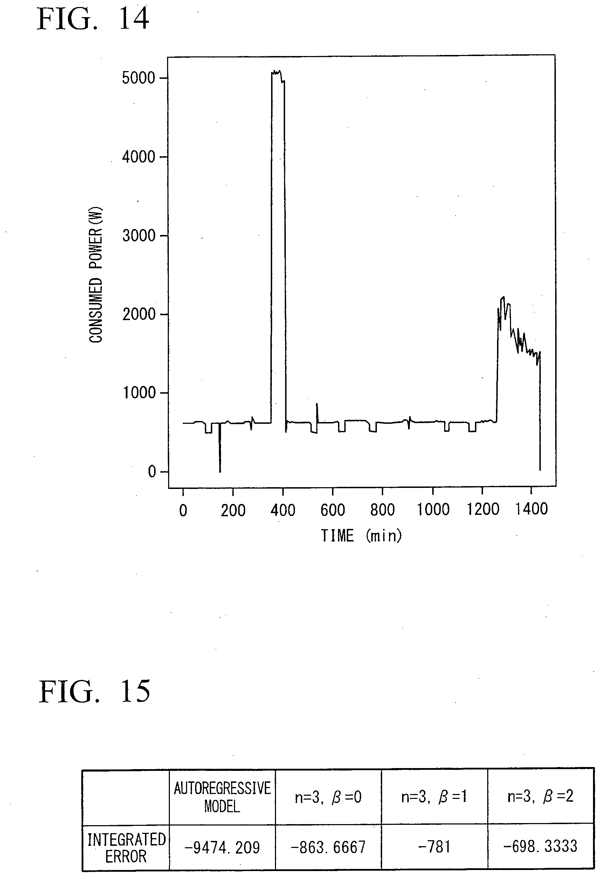

FIG. 14 is a diagram showing a change in power consumption over time, which is used to indicate a comparison of the results of the power consumption estimation between the estimate based on the estimation function of the present embodiment (equation (2) to calculate the estimated power consumption cs(t)) and the estimate based on the autoregressive model. In FIG. 14, the horizontal axis shows the time (minutes) and the vertical axis shows the measured power consumption (W: watt). As the autoregressive model, the regression equation shown above is used.

As a comparison between the estimation function of the present embodiment and the autoregressive model, with using the power consumption data of FIG. 14 sequentially in chronological order, a difference is obtained as in the case of FIG 12 between the estimated power consumption values at the respective times and the consumed power values measured at the times at which the estimated power consumption values are obtained. Then, using the obtained difference as an error, an integration is performed for all the times for which the comparison is made between the estimated power consumption values and consumed power values for estimating this error. It is considered that the larger the absolute value of the integrated value (integrated error) as a result of this integration, the worse the accuracy of estimation.

FIG. 15 is a diagram showing the results of comparison of accuracy between the estimation function of the present embodiment using the measured values of power consumption and the autoregressive model, as shown in FIG. 14.

In FIG. 14, the integrated error in the case of using the autocorrelation model is "-9474.209". Further, when the estimation function (equation (2)) of the present embodiment is used, the integrated error is "-863.6667" when n = 3 and $\beta$ = 0, "-781" when n = 3 and $\beta$ = 1, and "-698.3333" when n = 3 and $\beta$ = 2.

Therefore, as compared to the integrated error of "9474.209 " in the case of using the autocorrelation model, the integrated error in the case of using the worst estimation function of the present embodiment where n = 3 and $\beta$ = 0 is "-863.6667", from which it is understood that the estimation function of the present embodiment is higher in the estimation accuracy than the autocorrelation model even in the case of FIG. 14 as in the case of FIG. 12.

Thus, according to the present embodiment, the estimated surplus power in the next control period is calculated from the measured values of the power generation and the power consumption in the past consecutive measurement periods including the latest measurement period; therefore, the adjustment to the most recent change in the power consumption and the power generation is possible differing from the case of using the conventional autoregressive model, and the surplus power can be estimated with high accuracy, whereby It is possible to reduce the economic loss that is caused by wastefully flowing the surplus of the power generated by the customer facility in the next control period back to the system power supply or caused by storing not only the surplus power but also the purchased power.

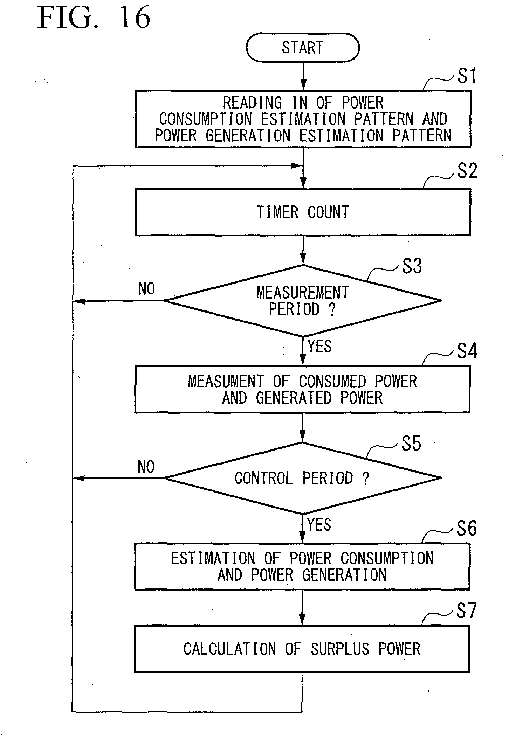

Fig. 16 is a flowchart showing an example of operation of the surplus power estimation process implemented by the surplus power estimation unit 108.

The power consumption estimation unit 1081 reads the power consumption estimation pattern selected by the user from the power consumption estimation pattern table of the memory unit 1084. The power generation estimation unit 1082 reads the power generation estimation pattern selected by the user from the power generation estimation pattern table of the memory unit 1084 (step S1). At this time, the timer control unit (not shown) initializes the timer (resets the timer to 0) inside the timer control unit and causes the timer to start counting.

Then, the timer continues counts to perform the time measurement (timer count) (step S2).

The timer control unit determines whether or not the preset time of the measurement period has elapsed from the count value of the timer (step S3). At this time, if the count value has passed the time of the measurement period, the timer control unit advances the process to step S4, while if the count value has not passed the time of the measurement period, the timer control unit advances the process to step S2.

The power consumption estimation unit 1081 reads the power consumption from the control unit 107 provided per facility and inputs the power consumption to the filter as power consumption c(t) (step S 4). At this time, the power consumption estimation unit 1081 stores the power consumption measured in the immediately preceding measurement period as the power consumption c(t - 1) in the delay unit 1081_1. Then, the power consumption estimation unit 1081 sequentially shifts the power consumption of the immediately preceding measurement period stored in the delay unit, and deletes the oldest past power consumption stored in the delay unit in the immediately preceding measurement period.

Similarly, the power consumption estimation unit 1081 reads the power consumption from the control unit 107 provided per facility and inputs the power consumption to the filter as power consumption c(t) (step S 4). At this time, the power consumption estimation unit 1081 stores the power consumption measured in the immediately preceding measurement period as the power consumption c(t - 1) in the delay unit 1081_1. Then, the power consumption estimation unit 1081 sequentially shifts the power consumption of the immediately preceding measurement period stored in the delay unit, and deletes the oldest past power consumption stored in the delay unit in the immediately preceding measurement period.

The timer control unit determines whether or not the preset time of the control period has elapsed from the count value of the timer (step S5). At this time, if the count value has passed the time of the control period, the timer control unit advances the process to step S6, while if the count value has not passed the time of the control period, the timer control unit advances the process to step S2.

Based on the read-out power consumption estimation pattern, the power consumption estimation unit 1081 calculates the estimated power consumption cs(t + 1) by the equations (2) and (3) corresponding to the filter, and estimates the power consumption for the next control period (step S6).

Similarly, based on the read-out power generation estimation pattern, the power generation estimation unit 1082 calculates the estimated power generation gs(t + 1) by the equations (4) and (5) corresponding to the filter, and estimates the power generation to be used in the control period by the power management apparatus 200.

The differential voltage estimation unit 1083 subtracts the estimated power consumption cs(t + 1) obtained by the power consumption estimation unit 1081 from the estimated power generation gs(t + 1) obtained by the power generation estimation unit 1082, to calculate the estimated surplus power ps(t + 1) as a differential voltage (step S7). Then, the differential voltage estimation unit 1083 advances the process to step S2.

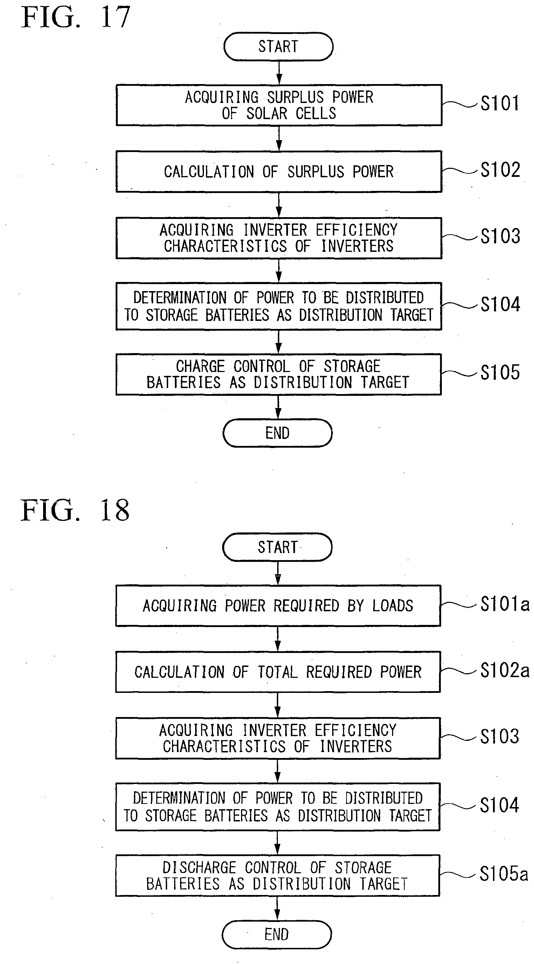

Fig. 17 is a flowchart showing an example of procedures implemented by the power management system 200 in response to the charge control. Based on the estimated surplus power estimated by the power estimation unit 108, the power management apparatus 200 performs charge control of the storage battery 103 in each customer facility 10 in a configuration as shown in FIG. 6 as follows.

The total power calculation unit 221 acquires the surplus power of the photovoltaic module 101 in each customer facility 10 in the power managed area 1 (step S101).

Therefore, for example, the total power calculation unit 221 requests notification of the estimated surplus power ps(t + 1) of the photovoltaic module 101 via the network 300 with respect to each of the control units 107 in the respective customer facilities 10. In response to this request, each of the control units 107 provided per facility causes the power estimation unit 108 to calculate the estimated surplus power ps(t + 1) of the photovoltaic module 101 under its own control. As already mentioned above, this estimated surplus power is obtained as an estimated value of the difference between the power generated by the photovoltaic module 101 and the power consumption by the load 106, both in the same customer facility 10. The control unit 107 provided per facility notifies the power management apparatus 200 of the estimated surplus power of the photovoltaic module 101 obtained in this manner.

Thus, the total power calculation unit 221 in the power management apparatus 200 obtains the estimated surplus power ps(t + 1) of the photovoltaic module 101 notified from each control unit 107 provided per facility.

The total power calculation unit 221 adds up the values of the estimated surplus power ps(t + 1) of the photovoltaic modules 101 acquired in step S101 to calculate the total value of the estimated surplus power (total power p) with respect to the group of photovoltaic modules 101 in the customer facilities 10 under the control of the total power calculation unit 221 (step S102).

Next, the power distribution determination unit 222 reads and acquires the inverter efficiency characteristics of each inverter 104 in the power managed area 1 from the inverter efficiency data table 240 stored in the inverter efficiency data storing unit 224 (step S103).

Then, the power distribution determination unit 222 uses the total value of the estimated surplus power ps(t + 1) calculated in step S102 and the inverter efficiency characteristics acquired in step S103 to determine the storage batteries 103 in the customer facilities 10 as the distribution target and the power to be distributed to each of the storage batteries 103 (step S104).

Based on the results of determination in step S104, the distribution control unit 223 performs control such that the determined distribution power is charged to each of the storage batteries 103 of the customer facilities 10 which have been determined as the distribution target (step S105).

Thus, the charge control is performed with respect to a group of storage batteries 103 in the customer facilities 10, whereby the inverter 104 corresponding to the storage battery 103 determined as the distribution target can be caused to perform, for example, power conversion around the power rating. As a result, all the inverters 104 corresponding to the storage batteries 103 determined as the distribution target maintain high efficiency and the power loss is reduced.

On the other hand, power for charging is not supplied to the storage battery 103 that has not been determined as the distribution target. Therefore, no power loss occurs at the inverter 104 corresponding to the storage battery 103 that has not been determined as the distribution target.

As a result, the power loss in the group of inverters 104 for charging the group of storage batteries 103 in the power managed area 1 is reduced.

Next, explanations are made on the discharge control performed by the power management apparatus 200 as the power distribution control with respect to the storage batteries 103 in the power managed area 1.

The flowchart of Fig. 18 shows an example of procedures for the discharge control implemented by the power management system 200. In Fig. 18, the same process steps as in Fig. 17 are designated by the same reference numerals as in Fig. 17.

First, the total power calculation unit 221 in the discharge control calculates the estimated surplus power (negative numerical value) in the case where the power generation is small relative to the power consumption required by each of the loads 106, that is, the power required for the loads in addition to the generated power (step S101a).

For this purpose, the total power calculation unit 221 requests notification of the surplus power via the network 300 with respect to each of the control units 107 provided per facility. In response to this request, each of the control units 107 provided per facility causes the power estimating unit 108 to calculate the estimated surplus power ps(t + 1) of the load 106 under its own control, and notifies the estimated surplus power ps(t + 1) to the power management apparatus 200. Thus, the total power calculation unit 221 obtains the estimated surplus power ps(t + 1) notified from each control unit 107 provided per facility.

Next, the total power calculation unit 221 calculates the total of estimated power consumption required by a group of the loads 106, that is, the estimated surplus power ps(t + 1) as the total power p (step S102 a). For this purpose, the total power calculation unit 221 may calculate the total of the values of estimated demanded power ps(t + 1) acquired from the customer facilities 10 in step S101a.

The processes in steps S103 and S104 in FIG. 18 are the same as in FIG. 17. However, in step S104, the power distribution determination unit 222 determines storage batteries 103 for supplying the total power p required by the group of the loads 106 as the distribution target. Further, in step S104, the power distribution determination unit 222 determines the power to be output by discharging as the distribution power with respect to each of the storage batteries 103 as the distribution target.

Then, the distribution control unit 223 performs discharge control with respect to the storage batteries 103 as the distribution target such that the respectively determined amounts of distribution power are output (step S 105a) .

Thus, by performing the discharge control process of the storage battery 103 in each customer facility 10, a power loss at the inverter 104 can be reduced even in the case of discharging from the storage battery 103.

As another example of the embodiment where the surplus power is distributed to the storage batteries 103 in the charge control and discharge control as described above, the total power calculation unit 221 collects the estimated surplus power from each customer facility 10 and calculates the total of the values of estimated surplus power ps(t + 1) in the power managed area 1 (estimated surplus power in managed area) which is used by the power distribution determination unit 222 for controlling the discharge or charge. Then, the power distribution control unit 223 distributes the estimated surplus power in managed area determined by the power distribution determination unit 222 in accordance with the SOC (state of charge) of the storage battery 103 in each customer facility 10. For example, when it is assumed that each of the maximum charge capacity and the maximum discharge capacity of the storage battery 103 is 3 kW and a power of 7 kW needs to be discharged from the estimated surplus power in managed area, a command to discharge at 3 kW is issued with respect to each of two customer facilities 10, and a command to discharge the remaining power of 1 kW is issued with respect to another customer facility 10.

When the same storage batteries 103 are always selected and caused to be discharged by the power distribution determination unit 222, the deterioration of the storage batteries 103 is accelerated; therefore, the storage batteries 103 to be discharged must be selected so that all the storage batteries 103 are discharged as uniformly as possible. The customer facilities 10 are assigned serial numbers, and the storage batteries 103 of the customer facilities 10 are sequentially selected so that the serial numbers loop, whereby all the storage batteries 103 can be uniformly discharged while avoiding concentrated discharge of the storage battery 103 of any particular customer facility 10. That is, it is possible to avoid a situation where mostly only the storage battery 103 of any particular customer facility 10 is charged or discharged in a day, and to suppress the increase of the number of cycles (charge/discharge cycle) of only any particular storage battery 103. In the case where the discharging is performed in the order of from the storage battery 103 of the customer facility of smaller serial number, it is when the discharging storage battery 103 of a certain customer facility 10 reaches the lower limit of SOC that another storage battery 103 of the customer facility 10 with the next number is caused to be discharged.

On the other hand, in the case where the power distribution determination unit 222 causes the storage batteries 103 to be charged and the discharge is performed in the order of from the storage battery 103 of the customer facility of smaller serial number, the charging is performed in the opposite order, i.e., in the order of from the storage battery 103 of the customer facility of larger serial number. That is, assuming that there are twenty (20) customer facilities 10, the numbers of 1 to 20 are assigned to the customer facilities 10. In the case of a configuration in which the discharge is sequentially performed in the order of from No. 1 to No. 20 customer facilities, the charge is performed in the order of from No. 20 to No. 1 customer facilities. Accordingly, when the charging of the storage batteries 103 of No. 20 to No. 18 customer facilities 10 is completed, the power distribution determination unit 222 then performs the charging control with respect to the storage battery 103 of No. 17 customer facility 10.

Alternatively, with respect to the charging and discharging of the storage batteries 103, the power distribution determination unit 222 may be configured to sequentially perform the charging from the storage battery 103 with a lower SOC and to sequentially perform the discharging from the storage battery 103 with a higher SOC. With this configuration, the storage batteries 103 of the customer facilities 10 are equally used, so that the SOC values of the storage batteries 103 of the customer facilities 10 become equal. Therefore, for example, this configuration is particularly advantageous in a system where the customer facilities 10 are supposed to use their own storage batteries at the time of a power failure.

Thus, according to the present embodiment, the estimated surplus power in the next control period is calculated with high accuracy from the measured values in the recent past measurement period; therefore, an adjustment of surplus power estimation can be made in accordance with the most recent change in the power consumption and the power generation differing from the case of using the conventional technique, whereby it is possible to perform the charge control and the discharge control in the control period in correspondence with the power generation and the power consumption at that time, resulting in reduction of the economic loss caused by wastefully flowing the surplus of the power generated by the customer facility back to the system power supply and storing not only the surplus power but also the purchased power.

<Second embodiment>

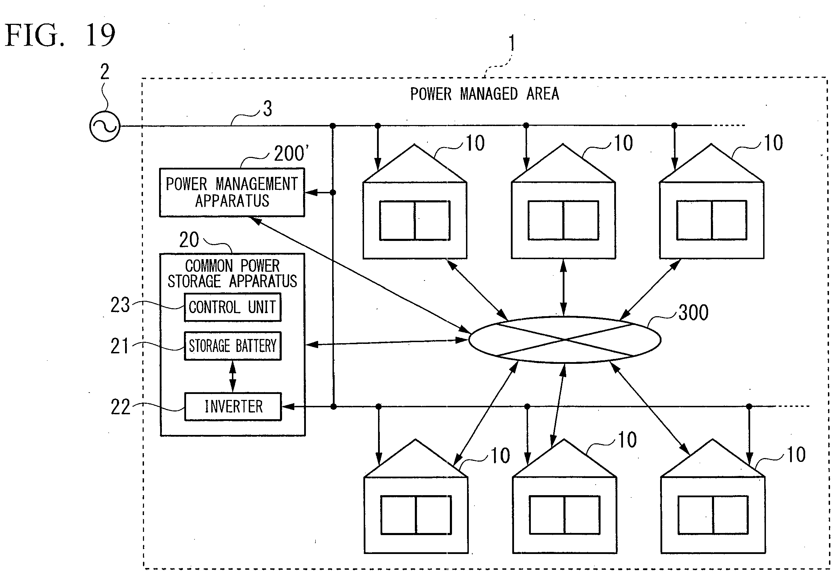

Hereinbelow, explanations are made with respect to the second embodiment of the present invention referring to the drawings. FIG. 19 shows an example of configuration of a power management system according to the second embodiment of the present invention. As in the case of the first embodiment, the power management system of this embodiment corresponds to what is called TEMS or CEMS, and collectively manages the power in a plurality of customer facilities such as residential houses, commercial facilities and industrial facilities, which are located in a specific area.

With respect to the second embodiment of FIG. 19, the same elements as in the first embodiment of FIG. 1 are denoted with the same reference numerals, and explanations thereof are omitted. Hereinbelow, the configurations and operations different from those of the first embodiment are explained.

In FIG. 19, a common power storage apparatus 20 is added to the configuration of FIG 1. Further, in order to control the common power storage apparatus 20, the configuration of the power management apparatus 200 is replaced with that of the power management device 200'.

The common power storage apparatus 20 is a power storage apparatus commonly provided to the customer facilities 10 in the power management system, and is connected to the system power supply 3 common to the customer facilities 10.

In the embodiment shown in FIG. 19, the power management apparatus 200' is connected to the system power supply 3; however, the power management apparatus 200' may not be connected to the system power supply 3, for example, in the case where the customer facilities 10 are located in different areas. In this case, since the power management apparatus 200 and each customer facility 10 are connected via the network 300, the power management apparatus 200 is configured such that the information of the system power supply 3 to which the customers facility 10 is connected is obtained from the customer facility 10 via the network 300.

Further, in FIG. 19, the power management apparatus 200' and the common power storage apparatus 20 are connected via a control line, but the power management device 200' may not be connected to the common power storage device 20 via a control line. In the latter case, the common power storage apparatus 20 is connected to the network 300. Then, the common power storage apparatus 20 transmits information such as the amount of stored power to the power management apparatus 200' via the network 300, and is subjected to charge/discharge control on the internal storage batteries from the power management apparatus 200'.

The common power storage apparatus 20 includes a storage battery 21, an inverter 22, and a control unit 23.

The storage battery 21 stores electric power input by charging and output stored electric power by discharging. As the storage battery 21, for example, a lithium ion battery can be used.

The control unit 23 controls operations of the storage battery 21 and the inverter 22 in the common power storage apparatus 20. That is, the charging and discharging operations in the common power storage apparatus 20 are controlled by the control unit 23.

The control unit 23 controls the storage battery 21 and the inverter 22 under the control of the power management apparatus 200'. Here, with the control unit 23 monitoring the power value of the system power supply 3, the control of the inverter 22 may be performed independently such that each of the purchased power and the sold power throughout the entire consumer facilities 10 in the power managed area 1 becomes "0".

In the control by the common power storage apparatus according to the present embodiment, as shown in FIG.

19, the power management apparatus 200' controls the charging and discharging operations of the common power storage apparatus 20 connected to the system power supply 3.

As illustrated in FIG. 6, when charging the storage batteries 103-1 to 103-n with the total power p of the surplus power in the photovoltaic modules 101-1 to 101-n, there is a possibility that the total power p is relatively large with respect to the total of the unfilled capacities of the storage batteries 103-1 to 103-n.

The power generation by the photovoltaic module 101 depends on conditions such as daylight hours. For example, with fine sunny weather, the power generation by the photovoltaic modules 101-1 to 101-n increases, whereby the total power generation also becomes considerably high. In such a case, when the unfilled capacities of the storage batteries 103-1 to 103-n are not sufficient, it may become impossible to distribute all of the total power p to the storage batteries 103-1 to 103-n.

When this occurs, the differential power occurs in the total power p as the surplus of the power for charging the storage batteries 103-1 to 103-n. Such differential power as the surplus flows out to the system power supply 3 to become a loss.

Alternatively, there may be a situation where the filled capacities of the storage batteries 103-1 to 103-n are relatively small with respect to the large amount of power demanded by the loads 106-1 to 106-n. In such a situation, as shown in FIG. 8, the storage batteries 103-1 to 103-n may be controlled to distribute power to the loads 106-1 to 106-n.

In such a case, the total power p which is the sum of the power values p1 to pn output from the storage batteries 103-1 to 103-n via the inverters 104-1 to 104-n is less than the total load power required by the loads 106-1 to 106-n.

When this occurs, the differential power occurs in the total power p as a shortage of the power to be supplied to the loads 106-1 to 106-n. Due to the occurrence of such differential power as a shortage, the power from the commercial power supply 2 flows into the system power supply 3 to make up the deficiency, resulting in the increased use of power from the commercial power supply 2.

Further, as can be understood from the above explanations, the power management by the first power management unit 202 in the power management apparatus 200 of the present embodiment allows communication with the control units 107 provided per customer facility 10 via the network 300.

That is, in calculating the total power p, the first power management unit 202 acquires the surplus power for each photovoltaic module 101 from the control units 107 provided per facility via the network 300 as shown as step S101 in FIG. 17. Alternatively, the power management apparatus 200 acquires the load power of the loads 106 from the control units 107 provided per facility via the network 300 as shown as step S101a in FIG. 18. Thus, the first power management unit 202 acquires information necessary for power management via the network 300.

Further, when performing the charge control in step S105 in FIG. 17 or the discharge control in step S105a in FIG. 18, the first power management unit 202 controls the control units 107 provided in the respective customer facilities 10 through communication via the network 300. In performing the control, for example, the first power management unit 202 transmits control data including a command value for charging or discharging the storage battery 103 to the control unit 107 provided per facility.

However, the communication via the network is of a best-effort type, and the communication speed is not always guaranteed, and there is no guarantee that data will reach the target within a desired period of time.

Therefore, the timing at which the control unit 107 provided in each customer facility 10 receives the control data and executes the control of the storage battery 103 may be delayed relative to the timing at which the data on the surplus power of the storage battery 103 for generating the control value or the load power of the load 106 has been acquired. The time lag due to such a delay may grow considerably large depending on the traffic of the network 300 and other factors such as the processing load of the power management apparatus 200 and the control units 107 provided per facility.

In such a case, a discrepancy is present between the content of the control indicated by the control data received by the control unit 107 provided per facility and the current total power to be controlled. When charging and discharging operations of the storage battery 103 are controlled with such a discrepancy being present between the control data and the current power, an error occurs in the amount of power being charged or discharged, resulting in excess or shortage of the amount of power charged to or discharged from the storage battery 103. In other words, a differential power due to the excess or shortage of the power charged to or discharged from the storage battery 103 occurs also by the time lag of the power distribution control by the first power management unit 202.

As described above, a differential power caused by the time lag of the power distribution control also results in disadvantages such as a power loss caused by the flowing out of the differential power as excess power to the system power supply 3 and an increase in the usage of the power from the commercial power supply 2 caused by the flowing in of a differential power as shortage from the commercial power supply 2 to the system power supply 3.

Therefore, concurrently with the power distribution control by the first power management unit 202, the second power management unit 203 in the power management apparatus 200 controls the charging and discharging operations of the common power storage apparatus 20 as described below. Such control by the second power management unit 203 enables the suppression of the differential power occurring as described above.

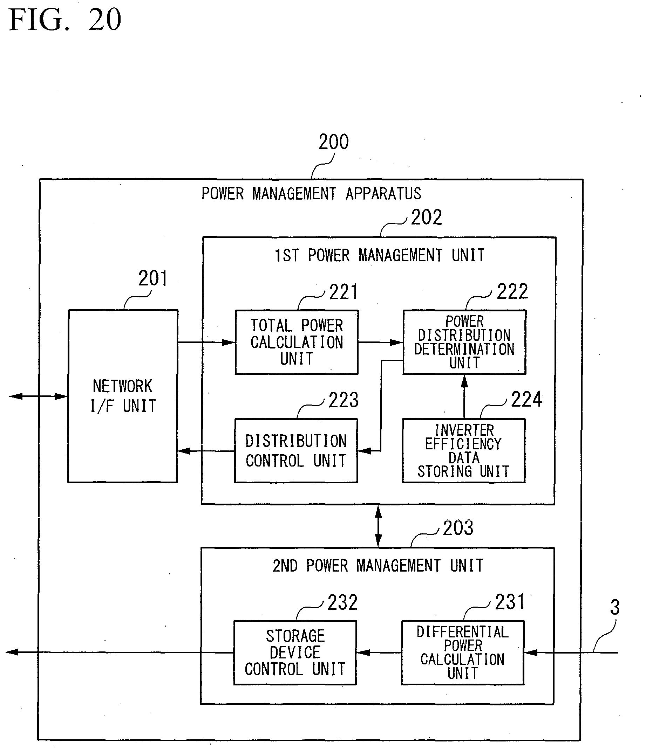

Next, explanations are made on an example of configuration of the power management apparatus 200' that performs charging and discharging with respect to the common power storage apparatus 20, referring to FIG. 20. FIG. 20 is a diagram showing an example of configuration of the power management system 200' according to the second embodiment of the present invention. The second power management unit 203 shown in FIG. 20 includes a differential power calculation unit 231 and a storage device control unit 232.

In FIG. 19, the differential power calculation unit 231 of the power management apparatus 200' calculates the differential power. However, alternatively, the system of the present invention may have a configuration wherein a control unit (not shown) of the common power storage apparatus 20 calculates the differential power and the power management apparatus 200' acquires the data on differential power calculated by the control unit via the network 300.

The differential power calculation unit 231 calculates a differential power corresponding to a surplus of the power to be charged to the storage batteries 103 in the power management system or a shortage of the power to be supplied from the storage batteries 103 to the loads 106 while being under the power distribution control by the first power management unit 202.

The differential power calculation unit 231 calculates the differential power based on the power obtained at the system power supply 3. More specifically, as shown in FIG. 6 or FIG. 8, the differential power calculation unit 231 measures a current value of the total power p obtained at a connection point with the common power storage apparatus 20 since the total power p at the system power supply can be obtained, and calculates a differential power Pdf using the measured current value.

The storage device control unit 232 controls the charging or discharging of the common power storage apparatus 20 based on the differential power calculated by the differential power calculation unit 231.

Further, in FIG. 19, the power management apparatus 200' is configured to control the charging and discharging of the common power storage apparatus 20 via the control line. However, this control line may be omitted while connecting the common power storage apparatus 20 to the network 300 so that the power management apparatus 200' controls the charging and discharging of the storage batteries in the common power storage apparatus 20 via the network 300.

According to the present embodiment, even when a differential power occurs due to the time lag of the power distribution control, and this causes phenomena such as a power loss due to the flowing out of the differential power as excess power to the system power supply 3 and an increase in the usage of the power from the commercial power supply 2 due to the flowing in of a differential power as shortage from the commercial power supply 2 to the system power supply 3, the common power storage apparatus 20 can decrease such a differential power.

Further, according to the present embodiment, since the differential power can be reduced by estimating the surplus power in the control period with high accuracy as compared to the conventional techniques, the capacity of the storage battery of the common power storage apparatus 20 can be reduced and the equipment cost of the common power storage apparatus 20 can be reduced.

<Third embodiment>

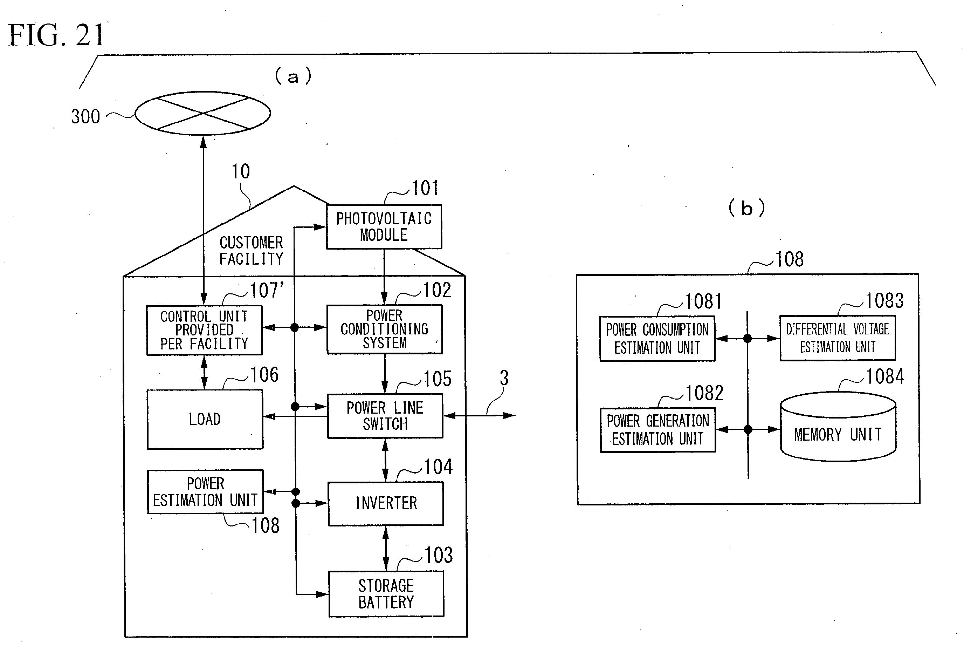

Hereinbelow, explanations are made with respect to the third embodiment of the present invention referring to the drawings. The power management system of the third embodiment of the present invention has the same configuration as in the first embodiment shown in FIG. 1, and corresponds to what is called TEMS or CEMS that collectively manages the power in customer facilities such as residential houses, commercial facilities and industrial facilities, which correspond to the customer facilities located in a specific area. In the following explanations on the third embodiment of FIG. 21, the same elements as in the first embodiment shown in FIG. 1 and FIG. 2 are denoted with the same reference numerals, and explanations thereon are omitted. Hereinbelow, the configurations and operations different from those of the first embodiment are explained.

Next, explanations are made on an example of electrical equipment provided in one customer fancily 10, referring to FIG. 21. FIG. 21 is a diagram showing an example of configuration of electrical equipment possessed by one customer facility 10 according to the third embodiment of the present invention. Here, FIG. 21(a) shows an example of configuration of electrical equipment provided in the customer facility 10. In this FIG. 21 (a), the customer facility 10 has, as electrical equipment, a photovoltaic module 101, a power conditioning system 102, a storage battery 103, an inverter 104, a power line switch 105, a load 106, a control unit 107' provided per facility and a power estimation unit 108. FIG. 21(b) shows an example of configuration of the power estimation unit 108 in FIG. 21(a). The power estimation unit 108 has a power consumption estimation unit 1081, a power generation estimation unit 1082, and a differential voltage estimation unit 1083 and a memory unit 1084.

The control unit 107' provided per facility controls electric equipment (all or a part of the photovoltaic module 101, the power conditioning system 102, the storage battery 103, the inverter 104, the power line switch 105 and the load 106) in the customer facility 10 as in the case of the first embodiment. When the control unit 107' provided per facility receives a request for the output suppression from the power management apparatus 200' (described later), the control unit 107' does not allow the power conditioning system 102 to form a power path with any of the load 106 and the inverter 104, so as to prevent the power conditioning system 102 from supplying the power generated by the photovoltaic module 101 to any of them.

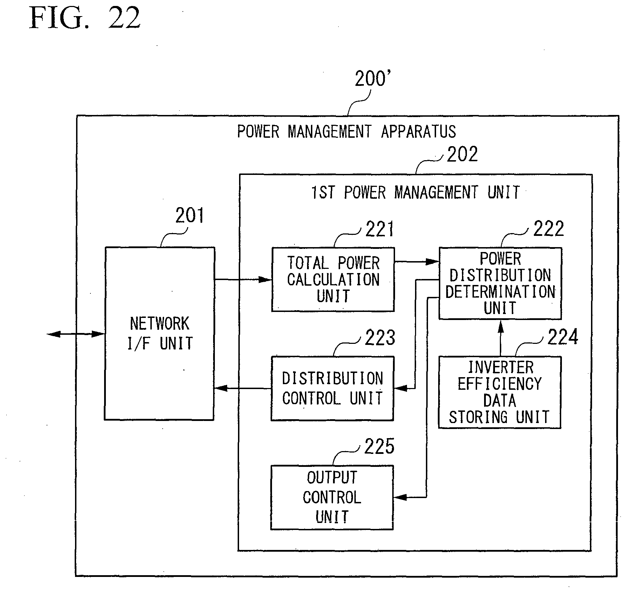

Next, explanations are made on an example of configuration of a power management system 200' adapted to power distribution control, referring to FIG. 22. FIG. 22 is a diagram showing an example of configuration of a power management system 200' adapted to power distribution control according to the third embodiment. The power management apparatus 200' has a network I/F unit 201 and a first power management unit 202 which are adapted to the power distribution control.

The network I/F unit 201 allows exchange of various data between control units 107 of respective customer facilities 10 via the network 300.

The first power management unit 202 (an example of the power management unit adapted to the customer facilities) executes a prescribed power management for the electric equipment in a plurality of the customer facilities 10 in the power managed area 1.

The power management executed by the first power management unit 202 in the present embodiment is the above-described power distribution control for reducing the loss at the inverter 104 for each customer facility 10.

The first power management unit 202 shown in FIG. 22 includes a total power calculation unit 221, a power distribution determination unit 222, a distribution control unit 223, an inverter efficiency data storing unit 224, and a output suppression unit 225.

The total power calculation unit 221 calculates the total power (total charge power) to be charged to a group of the storage batteries 103 in the power managed area 1 or the total power (total discharge power) to be discharged from a group of the storage batteries 103 in the power managed area 1. Hereinbelow, when the total charge power and the total discharge power need not be distinguished from each other, these are collectively referred to as the "total power".

The power distribution determination unit 222 selects at least one storage battery 103 as the distribution target of the total power from among the storage batteries 103 of the plurality of customer facilities 10 based on the respective inverter efficiency characteristics of the inverters 104. In addition to this, the power distribution determination unit 222 also determines power to be distributed for each storage battery 103 of the customer facility 10 as the determined distribution target.

The distribution control unit 223 performs control such that the determined distribution power is distributed to each storage battery 103 of the customer facility 10 as the distribution target.

The inverter efficiency data storing unit 224 stores in advance the inverter efficiency characteristics of each inverter 104 used by the power distribution determination unit 222. In other words, the inverter efficiency data storing unit 224 stores the inverter efficiency characteristics of each inverter 104 provided in the power managed area 1.

One inverter efficiency characteristic shows the variation characteristic of the efficiency dependent on the power with respect to the corresponding inverter 104. Further, the inverter efficiency data storing unit 224 writes and stores inverter efficiency characteristics of each inverter 104 in the power managed area 1 in the inverter efficiency data table.

When the output suppression is notified via the network 300 from the electric power company (power transmission and distribution company) that supplies electric power from the commercial power supply 2, requesting not to flow back the power (for example, one day before executing the output suppression), the output suppression unit 225 executes the output suppression with respect to each customer facility 10 if a surplus power occurs in the power managed area 1. A plurality of consumer facilities 10 in the power managed area 1 supply electric power to other customer facilities 10 such as business offices and commercial facilities.

The output suppressing unit 225 calculates the surplus power in the entire power managed area 1, based on the power consumption in the customer facilities 10 in the power managed area 1 under its own control, the SOC of the storage batteries 103, and the generated power output from the photovoltaic modules 101. Then, the output suppression unit 225 executes the output suppression with respect to the customer facilities 10 in accordance with the surplus power in the power managed area 1.

Further, when the power transmission and distribution company requests output suppression, the output suppressing unit 225 may write and store the request while associating the request with information on the time of the request and the scheduled execution of the output suppression in the internal memory unit, and execute the output suppression with respect to the customer facilities 10 based on the stored information. Furthermore, the output suppressing unit 225 may be configured to make a judgement to discontinue the output suppression with respect to the customer facilities 10 in the process of stopping the output suppression imposed on the customer facilities 10 in the power managed area 1, for example, when the time period for the output suppression reported beforehand by the transmission and distribution company is over, when it is detected that the notification of the output suppression from the transmission and distribution company is discontinued (absence of notification of the output suppression), or when the transmission and distribution company notifies the termination of the output suppression (issuance of command to cancel the output suppression).

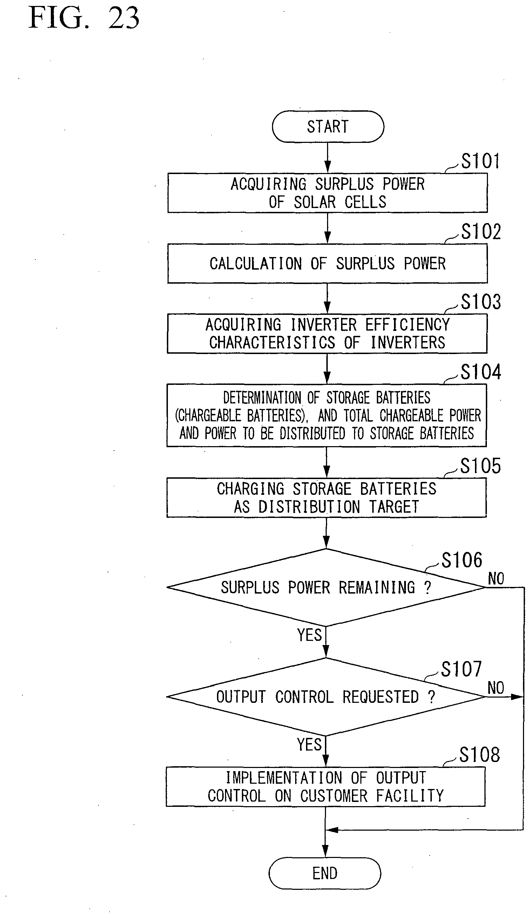

Fig. 23 is a flowchart showing an example of procedures implemented by the power management system 200' according to the present embodiment of the present invention in response to the control of the output suppression. Based on the estimated surplus power determined by the power estimation unit 108, the power management apparatus 200' performs suppression of output of the surplus power in each customer facility 10 in a configuration as shown in FIG. 21 as follows.

The total power calculation unit 221 acquires the surplus power of the photovoltaic module 101 in each customer facility 10 in the power managed area 1 (step S101).

Therefore, for example, the total power calculation unit 221 requests notification of the estimated surplus power ps(t + 1) of the photovoltaic module 101 via the network 300 with respect to each of the control units 107 in the respective customer facilities 10. In response to this request, each of the control units 107 provided per facility causes the power estimation unit 108 to calculate the estimated surplus power ps(t + 1) of the photovoltaic module 101 under its own control. As already mentioned above, this estimated surplus power is obtained as an estimated value of the difference between the power generated by the photovoltaic module 101 and the power consumption by the load 106, both in the same customer facility 10. The control unit 107 provided per facility notifies the power management apparatus 200 of the estimated surplus power of the photovoltaic module 101 obtained in this manner.

Thus, the total power calculation unit 221 in the power management apparatus 200 obtains the estimated surplus power ps(t + 1) of the photovoltaic module 101 notified from each control unit 107 provided per facility.

The total power calculation unit 221 adds up the values of the estimated surplus power ps(t + 1) of the photovoltaic modules 101 acquired in step S101 to calculate the total value of the estimated surplus power (total power p) with respect to the group of photovoltaic modules 101 in the customer facilities 10 under the control of the total power calculation unit 221 (step S102). At this time, the power distribution determination unit 222 supplies the surplus power of the customer facilities 10 to the business offices and commercial facilities having large power consumption. At this time, the power distribution determination unit 222 searches for a business office and a commercial facility in need of a peak cut via the network 300, and supplies the surplus power to the business office and the commercial facility.

Next, the power distribution determination unit 222 reads and acquires the inverter efficiency characteristics of each inverter 104 in the power managed area 1 from the inverter efficiency data table 240 stored in the inverter efficiency data storing unit 224 (step S103).

Then, the power distribution determination unit 222 uses the total value of the estimated surplus power ps(t + 1) calculated in step S102 and the inverter efficiency characteristics acquired in step S103 to determine the storage batteries 103 in the customer facilities 10 as the distribution target and the power to be distributed to each of the storage batteries 103 (step S104). Here, the power distribution determination unit 222 calculates the total chargeable power amount while adding the power to be distributed to the storage battery 103 as the distribution target, and outputs the power to the output suppressing unit 225.

Based on the results of determination in step S104, the distribution control unit 223 performs control such that the determined distribution power is charged to each of the storage batteries 103 of the customer facilities 10 which have been determined as the distribution target (step S105).

The output suppression unit 225 calculates a surplus difference between the estimated surplus power ps(t + 1) and the total amount of chargeable power distributed to the customer facilities 10 as the distribution target. Then, the output suppression unit 225 determines whether or not there is a surplus in the power (whether or not there is surplus power), based on whether the surplus difference is plus or minus (step S 106).

At this time, if there is a surplus power, the output suppressing unit 225 advances the process to step S107. On the other hand, if there is no surplus power, the output suppression unit 225 terminates the process.

The output suppression unit 225 judges whether or not the output suppression for the corresponding time is requested in advance from the power transmission and distribution company, based on whether or not information on receipt of a request for the output suppression for the corresponding time is stored in the internal memory unit (step S107).

When the output suppression request for the corresponding time has been made, the output suppression unit 225 advances the process to step S108 in order to change the operation plan of the TEMS corresponding to the output suppression request. On the other hand, the output suppression unit 225 terminates the process when the output suppression request for the corresponding time has not been made.

Then, the output suppression unit 225 requests the output suppression with respect to the customer facilities 10 having the photovoltaic modules 101 with a surplus power in the power managed area 1.

At this time, the output suppression unit 225 executes the output suppression with respect to the customer facilities 10 which are not provided with the storage batteries 103 but are provided with the photovoltaic modules 101. The output suppression unit 225 terminates the output suppression with respect to the customer facilities 10 which are not provided with the storage batteries 103 but are provided with the photovoltaic modules 101, and which can fully respond to the output suppression request from the power transmission and distribution company, that is, when the surplus difference becomes 0. Here, the output suppression unit 225 adds up the surpluses of powers generated by the photovoltaic modules 101 in all of the customer facilities 10 which are not provided with the storage batteries 103 but are provided with the photovoltaic modules 101, and subtracts the obtained value from the surplus difference to obtain a new surplus difference.

However, in the case where the new surplus difference does not become 0 only by suppressing the output from the customer facilities 10 which are not provided with the storage batteries 103 but are provided with the photovoltaic modules 101, the output suppression unit 225 acquires the SOC of the storage batteries 103 of the customer facilities 10 and searches for any customer facilities 10 where the storage batteries 103 are fully charged. Then, the output suppression unit 225 sequentially subtracts the surplus of the power generated in the consumer facilities 10 where the storage batteries 103 are fully charged from the new surplus difference while selecting the customer facility 10 where the storage battery 103 is fully charged, until the new surplus difference becomes 0.

Further, even when the output suppression is imposed on all of the customer facilities 10 with their storage batteries 103 fully charged, the output suppression unit 225 requests the output for the customer facilities 10 in the order of from one having a storage battery 103 with higher SOC unless the new surplus difference becomes 0, and selects the consumer facilities 10 in the order of from one having a storage battery 103 with higher SOC until the new surplus difference becomes 0.

Then, in the customer facility 10, upon receiving the output suppression request from the output suppression unit 225, the control unit 107' provided per facility executes an output suppression control to cut off the connection to the load 106, the inverter 104 and the system power supply 3 with respect to the power line switch 105 (step S107).

Thus, according to the present embodiment, since the output suppression control is performed with respect to a group of the photovoltaic modules 101 of the customer facilities 10 from the transmission and distribution company so as not to cause a reverse power flow to the system power supply 3, it is possible to perform a necessary and sufficient output suppression matching the request from the transmission and distribution company.

Further, as the utilization of renewable energy such as solar power or wind power, the output of which fluctuates naturally, is introduced more widely, there is a possibility that the power supply surpasses the power demand. Therefore, when the weather conditions and the like predict that the power supply exceeds the power supply adjustment capability of the power generator means by thermal power generation and the like, which can adjust the output, it becomes necessary to stop the output of the solar or wind power generation. The determination of whether or not such output suppression is necessary is made by a transmission and distribution company which transmits and distributes power to the power grid. When the output suppression is imposed on a customer facility by a power transmission and distribution company, the customer facility, if equipped with a storage battery in addition to a power generation means utilizing renewable energy such as solar power generator, can store the surplus power to the storage battery; however, when the storage battery is in a fully charged state, the surplus power can neither be flown back to the system nor be stored. On the other hand, other customer facilities may have storage batteries that are not fully charged.

According to the present embodiment, it is possible to provide a power management system which imposes a necessary and sufficient output suppression in response to the output suppression imposed by a transmission and distribution company.

Further, in the present embodiment, the functions of the power management apparatus 200 in FIG. 3 and FIG. 20 or the power management apparatus 200' in FIG. 22 and the management function of the storage battery 103 in the customer facility 10 shown in FIG. 2 and FIG. 21 may be performed by a method in which a program for implementing the functions is recorded in a computer-readable recording medium, and the program recorded in this medium is loaded into the computer system and implemented, so as to manage the charging and discharging of the storage battery. Herein, the "computer system" may embrace the operating system (OS) and the hardware such as peripheral devices.

The "computer system" may embrace a homepage provider environment (or a homepage display environment) when it uses a WWW system.

The "computer-readable recording media" may encompass flexible disks, magneto-optic disks, ROM, portable media such as CD-ROM, and other storage devices such as hard-disk units installed in computers. Additionally, the "computer-readable recording media" may encompass media which are able to dynamically retain programs for a short period of time, such as a communication line for transmitting a program via a network such as the Internet or a communication line such as a telephone line, and media which are able to retain programs for a certain period of time, such as internal volatile memory of computers acting as servers or clients involved in the transmission of the program. The aforementioned program may be one for implementing a part of the functions mentioned above, or may be one which can implement the functions when combined with a program already stored in the computer system.

Various embodiments of the present invention are explained above referring to the drawings; however, the specific configuration is not limited to those of the embodiments and may be altered as long as the alterations do not deviate from the gist of the present invention.

DESCRIPTION OF THE REFERENCE SYMBOLS

1 Power managed area

2 Commercial power source
3 System power supply
10 Customer facility
20 Common power storage apparatus
101 Photovoltaic module
102 Power conditioning system
103 Storage battery
104 Inverter
105 Power line switch
106 Load
107,107' Control unit provided per facility
108 Power estimation unit
200,200' Power management apparatus
201 Network I/F unit
202 First power management unit
203 Second power management unit
221 Total power calculation unit
222 Power distribution determination unit
223 Distribution control unit
224 Inverter efficiency data storing unit
225 Output suppression unit
231 Differential power calculation unit
232 Storage device control unit
1081 Power consumption estimation unit
1082 Power generation estimation unit
1083 Differential power estimation unit
1084 Memory unit
1081 TI, 1082TI Input terminal
1081TO, 1082TO Output terminal
10811_1, 10811_2, 10811_3, 10811_4, 10811_n, 10821_1, 10821_2, 10821_3, 10821_4, 10821_m Delay unit
10812_1, 10812_2, 10812_3, 10812_4, 10812_n, 10822_1, 10822_2, 10822_3, 10822_4, 10822_n Coefficient multiplication unit
10813_1, 10813_2, 10813_3, 10813_4, 10813_n, 10823_1, 10823_2, 10823_3, 10823_4, 10823_m Addition unit

**Claims**

1. A power management system, which is connected to a system power supply, and which, with respect to a storage battery in a first customer facility having a storage battery and a power generator as electrical equipment, controls discharge thereof to the first customer facility or charge thereof with surplus power generated in the first customer facility, the power management system comprising:

   a power consumption estimation unit which, based on a first filter estimation function to make estimation by measured value of power consumption in a limited period of past measurement, estimates power consumption of next period of measurement in the first customer facility as an estimated power consumption,
   a power generation estimation unit which, based on a second filter estimation function to make estimation by measured value of power generation in a limited period of past measurement, estimates power generation by the power generator of next period of measurement in the first customer facility as an estimated power generation,
   an surplus power estimation unit which obtains an estimated surplus power which is a difference between the estimated power generation and the estimated power consumption, and
   a power management unit for controlling each of the charge and discharge of the storage battery, based on the estimated surplus power obtained by the surplus power estimation unit.

2. The power management system according to claim 1, which controls each of the charge and discharge of a plurality of the storage batteries of customer facilities including the first customer facility having the storage battery and the power generator as electrical equipment and a second customer facility lacking one of the storage battery and the power generator, both being connected commonly to the system power supply,
   wherein the power consumption estimation unit, the power generation estimation unit and the surplus power estimation unit respectively obtain the estimated power consumption, the estimated power generation and the estimated surplus power, and

the power management unit controls the charge and discharge of the storage battery of each of the customer facilities, based on the estimated surplus power of each of the customer facilities.

3. The power management system according to claim 1 or 2, wherein the first filter estimation function for obtaining the estimated power consumption is defined by equation (1) below, and the weighting parameter w1 for each tap in the filter estimation function is set by a predetermined first function, and

wherein the second filter estimation function for obtaining the estimated power generation is defined by equation (2) below, and the weighting parameter w2 for each tap in the filter estimation function is set by a predetermined second function.

$$c(t+1)=w1(0)c(t)+w1(1)c(t-1)+w1(2)c(t-2)+\cdots w1(n-1)c(t-n+1)$$
$$\cdots(1)$$

$$w1(q)=2q(1-\beta)/(n(n-1))+\beta/n \qquad \cdots(2)$$

wherein β is a weight coefficient, n is a tracking number, and q is an order of weight function.

4. The power management system according to claim 3, wherein the first function to set the weighting parameter w1 for each tap in the first filter estimation function for obtaining the estimated power consumption is defined by equation (3) below, and

the second function to set the weighting parameter w2 for each tap in the second filter estimation function for obtaining the estimated power generation is defined by equation (4) below.

$$g(t+1)=w2(0)g(t)+w2(1)g(t-1)+w2(2)g(t-2)+\cdots w2(n-1)g(t-m+1)$$
$$\cdots(3)$$

$$W2(r)=2r(1-\alpha)/(m(m-1))+\alpha/m \qquad \cdots(4)$$

wherein a is a weight coefficient, m is a tracking number, and r is an order of weight function.

5. The power management system according to claim 4, wherein each of the weighting coefficient β and the tracking number n in the first function is previously set as an estimation pattern which is a set of different numerical values corresponding to control modes, and

each of the weighting coefficient a and the tracking number m in the second function is previously set as an estimation pattern which is a set of different numerical values corresponding to control modes.

6. The power management system according to any one of claims 1 to 5, wherein the measured value of power generation is a power generated by the power generator which is measured in a latest limited period of past measurement.

7. The power management system according to any one of claims 1 to 6, wherein the measured value of power consumption is a power consumed in the customer facility which is measured in a latest limited period of past measurement.

8. The power management system according to any one of claims 2 to 7, wherein the measured value of power generation is a total of the measured values of power generation in a plurality of the customer facilities.

9. The power management system according to any one of claims 2 to 8, wherein the measured value of power consumption is a total of the measured values of power consumption in a plurality of the customer facilities.

10. The power management system according to any one of claims 2 to 9, wherein the estimated power generation is a total of values of the estimated power generation in an arbitrary plurality of the customer facilities.

11. The power management system according to any one of claims 2 to 10, wherein the estimated power consumption is a total of values of the estimated power consumption in an arbitrary plurality of the customer facilities.

12. The power management system according to any one of claims 2 to 9, wherein the estimated power generation is a total of values of the estimated power generation in the customer facilities.

13. The power management system according to any one of claims 2 to 9 and 12, wherein the estimated power consumption is a total of values of the estimated power consumption in the customer facilities.

14. The power management system according to any one of claims 2 to 13, wherein the difference between the estimated power generation and the estimated power consumption is a total of values of the estimated power generation in an arbitrary plurality of the customer facilities.

15. The power management system according to any one of claims 2 to 14, wherein the difference between the estimated power generation and the estimated power consumption is a difference between the total of values of the estimated power generation in the customer facilities and the total of values of the estimated power consumption in the customer facilities.

16. The power management system according to any one of claims 1 to 15, wherein the control of the discharge and charge of the storage battery based on a differential power obtained in the period of measurement is performed for a control period which is the same as the period of measurement or for a control period formed by a plurality of periods of measurement, depending on mode of the control.

17. A power management method for controlling a power management system which is connected to a system power supply, and which, with respect to a storage battery in a first customer facility having a storage battery and a power generator as electrical equipment, controls discharge thereof to the first customer facility or charge thereof with surplus power generated in the first customer facility, the power management method comprising:

   a power consumption estimation step wherein, based on a first filter estimation function to make estimation by measured value of power consumption in a limited period of past measurement, a power consumption estimation unit estimates power consumption of next period of measurement in the first customer facility as an estimated power consumption,
   a power generation estimation step wherein, based on a second filter estimation function to make estimation by measured value of power generation in a limited period of past measurement, a power generation estimation unit estimates power generation of next period of measurement in the first customer facility as an estimated power generation,
   a surplus power estimation step wherein a surplus power estimation unit obtains an estimated surplus power which is a difference between the estimated power generation and the estimated power consumption, and
   a power management step wherein a power management unit controls each of the charge and discharge of the storage battery, based on the estimated surplus power obtained by the surplus power estimation unit.

18. The power management method according to claim 17, which controls each of the charge and discharge of a plurality of the storage batteries of customer facilities including the first customer facility having the storage battery and the power generator as electrical equipment and a second customer facility lacking one of the storage battery and the power generator, while being connected to the system power supply,
   wherein the power consumption estimation unit, the power generation estimation unit and the surplus power estimation unit respectively obtain the estimated power consumption, the estimated power generation and the estimated surplus power, and
   the power management unit controls the charge and discharge of the storage battery of each of the customer facilities, based on the estimated surplus power of each of the customer facilities.

19. The power management method according to claim 17, which controls each of the charge and discharge of a plurality of the storage batteries of customer facilities including the first customer facility having the storage battery and the power generator as electrical equipment and a second customer facility lacking one of the storage battery and the power generator, while being connected to the system power supply,

wherein the power consumption estimation unit, the power generation estimation unit and the surplus power estimation unit respectively obtain the estimated power consumption, the estimated power generation and the estimated surplus power, and

the power management unit controls the charge and discharge of the storage battery of each of the customer facilities, based on the estimated surplus power of each of the customer facilities, and performs an output suppression control, based on a total surplus power and a total chargeable power.

20. The power management method according to claim 17, wherein the power management unit obtains a total surplus power which is a total surplus of powers generated by the power generators in the customer facilities, obtains a total chargeable power which is a total of chargeable powers of the storage batteries in the customer facilities, and requests an output suppression to the customer facilities when the total surplus power exceeds the total chargeable power.

21. The power management method according to claim 19 or 20, which controls each of the charge and discharge of a plurality of the storage batteries of customer facilities including the first customer facility comprising the storage battery and the power generator as electrical equipment and a second customer facility lacking one of the storage battery and the power generator, while being connected commonly to the system power supply,

wherein the power consumption estimation unit, the power generation estimation unit and the surplus power estimation unit respectively obtain the estimated power consumption, the estimated power generation and the estimated surplus power, and

the power management unit controls the charge and discharge of the storage battery of each of the customer facilities, based on the estimated surplus power of each of the customer facilities.

22. The power management method according to claim 20 or 21, wherein the power management unit performs the output suppression control from the second customer facility lacking the storage battery.

23. The power management method according to claim 21, wherein the power management unit performs the output suppression control from the first customer facility with the storage battery thereof being fully charged and the second customer facility having the storage battery.

FIG. 1

EP 3 197 001 A1

# FIG. 2

## (a)

300

10 — CUSTOMER FACILITY

101 PHOTOVOLTAIC MODULE

107 CONTROL UNIT PROVIDED PER FACILITY

102 POWER CONDITIONING SYSTEM

106 LOAD

105 POWER LINE SWITCH — 3

104 INVERTER

108 POWER ESTIMATION UNIT

103 STORAGE BATTERY

## (b)

108

1081 POWER CONSUMPTION ESTIMATION UNIT

1083 DIFFERENTIAL VOLTAGE ESTIMATION UNIT

1082 POWER GENERATION ESTIMATION UNIT

1084 MEMORY UNIT

EP 3 197 001 A1

FIG. 3

FIG. 4

| IDENTIFIER FOR CONTROL UNIT PROVIDED PER FACILITY | ADDRESS OF CONTROL UNIT PROVIDED PER FACILITY | INVERTER EFFICIENCY CHARACTERISTICS |
|---|---|---|
| | | |
| | | |
| ⋮ | ⋮ | ⋮ |
| | | |

FIG. 5

# FIG. 6

| 106-1 | 101-1 | 101-2 | 101-i | 101-d |
|---|---|---|---|---|
| LOAD | PHOTOVOLTAIC MODULE | PHOTOVOLTAIC MODULE | PHOTOVOLTAIC MODULE | PHOTOVOLTAIC MODULE |

106-2

102-1  102-2  102-i  102-d

| LOAD | POWER CONDITIONING SYSTEM | POWER CONDITIONING SYSTEM | POWER CONDITIONING SYSTEM | POWER CONDITIONING SYSTEM |

Pdf  2

P

106-i

LOAD

$p_1$  104-1  $p_2$  104-2  $p_i$  104-i  $p_n$  104-d

106-d

| LOAD | INVERTER $(\eta_1)p_1$ | INVERTER $(\eta_2)p_2$ | INVERTER $(\eta_i)p_i$ | INVERTER $(\eta_n)p_n$ |

103-1  103-2  103-i  103-d

| LOAD | STORAGE BATTERY | STORAGE BATTERY | STORAGE BATTERY | STORAGE BATTERY |

FIG. 7

EP 3 197 001 A1

FIG. 8

| ESTIMATION PATTERN NO. | TRACKING NO. n | WEIGHT COEFFICIENT β | CONTROL GRANULARITY N | REMARKS |
|---|---|---|---|---|
| CP1 | 10 | 1 | 10 | INITIAL OPERATION |
| CP2 | 3 | 2 | 3 | STRONG TRACKING |
| CP3 | 3 | 1 | 3 | STRONG TRACKING |
| CP4 | 10 | 2 | 3 | MODERATE TRACKING |

FIG. 9

# FIG. 10

| ESTIMATION PATTERN NO. | TRACKING NO. m | WEIGHT COEFFICIENT α | CONTROL GRANULARITY N | REMARKS |
|---|---|---|---|---|
| GP1 | 10 | 1 | 10 | INITIAL OPERATION |
| GP2 | 3 | 2 | 3 | ULTRA STRONG TRACKING |
| GP3 | 3 | 1 | 3 | STRONG TRACKING |
| GP4 | 10 | 2 | 3 | MODERATE TRACKING |

# FIG. 11

# FIG. 12

# FIG. 13

|  | AUTOREGRESSIVE MODEL | n=3, $\beta$=0 | n=3, $\beta$=1 | n=3, $\beta$=2 |
|---|---|---|---|---|
| INTEGRATED ERROR | −1540. 967 | 1097 | 826 | 555 |

# FIG. 14

# FIG. 15

|  | AUTOREGRESSIVE MODEL | $n=3$, $\beta=0$ | $n=3$, $\beta=1$ | $n=3$, $\beta=2$ |
|---|---|---|---|---|
| INTEGRATED ERROR | -9474. 209 | -863. 6667 | -781 | -698. 3333 |

40

FIG. 16

```
                    ┌─────────────┐
                    │    START    │
                    └──────┬──────┘
                           │              ╭─ S1
           ┌───────────────▼──────────────────┐
           │      READING IN OF POWER          │
           │  CONSUMPTION ESTIMATION PATTERN AND│
           │  POWER GENERATION ESTIMATION PATTERN│
           └───────────────┬──────────────────┘
      ┌───────────────────►│              ╭─ S2
      │    ┌───────────────▼──────────────────┐
      │    │          TIMER COUNT             │
      │    └───────────────┬──────────────────┘
      │                    │              ╭─ S3
      │   NO        ◇───────▼───────◇
      │◄────────────  MEASUREMENT
      │               PERIOD ?
      │             ◇───────┬───────◇
      │                   │ YES          ╭─ S4
      │    ┌───────────────▼──────────────────┐
      │    │  MEASUMENT OF CONSUMED POWER      │
      │    │      AND GENERATED POWER          │
      │    └───────────────┬──────────────────┘
      │                    │              ╭─ S5
      │   NO        ◇───────▼───────◇
      │◄────────────   CONTROL PERIOD ?
      │             ◇───────┬───────◇
      │                   │ YES          ╭─ S6
      │    ┌───────────────▼──────────────────┐
      │    │  ESTIMATION OF POWER CONSUMPTION  │
      │    │     AND POWER GENERATION          │
      │    └───────────────┬──────────────────┘
      │                    │              ╭─ S7
      │    ┌───────────────▼──────────────────┐
      │    │  CALCULATION OF SURPLUS POWER     │
      │    └───────────────┬──────────────────┘
      │                    │
      └────────────────────┘
```

# FIG. 17

START

ACQUIRING SURPLUS POWER OF SOLAR CELLS — S101

CALCULATION OF SURPLUS POWER — S102

ACQUIRING INVERTER EFFICIENCY CHARACTERISTICS OF INVERTERS — S103

DETERMINATION OF POWER TO BE DISTRIBUTED TO STORAGE BATTERIES AS DISTRIBUTION TARGET — S104

CHARGE CONTROL OF STORAGE BATTERIES AS DISTRIBUTION TARGET — S105

END

# FIG. 18

START

ACQUIRING POWER REQUIRED BY LOADS — S101a

CALCULATION OF TOTAL REQUIRED POWER — S102a

ACQUIRING INVERTER EFFICIENCY CHARACTERISTICS OF INVERTERS — S103

DETERMINATION OF POWER TO BE DISTRIBUTED TO STORAGE BATTERIES AS DISTRIBUTION TARGET — S104

DISCHARGE CONTROL OF STORAGE BATTERIES AS DISTRIBUTION TARGET — S105a

END

FIG. 19

FIG. 20

200

POWER MANAGEMENT APPARATUS

202

1ST POWER MANAGEMENT UNIT

201

NETWORK I/F UNIT

221
TOTAL POWER CALCULATION UNIT

222
POWER DISTRIBUTION DETERMINATION UNIT

223
DISTRIBUTION CONTROL UNIT

224
INVERTER EFFICIENCY DATA STORING UNIT

203

2ND POWER MANAGEMENT UNIT

232
STORAGE DEVICE CONTROL UNIT

231
DIFFERENTIAL POWER CALCULATION UNIT

3

# FIG. 21

## (a)

CUSTOMER FACILITY 10

- 300
- 101 PHOTOVOLTAIC MODULE
- 107' CONTROL UNIT PROVIDED PER FACILITY
- 102 POWER CONDITIONING SYSTEM
- 106 LOAD
- 105 POWER LINE SWITCH
- 3
- 108 POWER ESTIMATION UNIT
- 104 INVERTER
- 103 STORAGE BATTERY

## (b)

108

- 1081 POWER CONSUMPTION ESTIMATION UNIT
- 1083 DIFFERENTIAL VOLTAGE ESTIMATION UNIT
- 1082 POWER GENERATION ESTIMATION UNIT
- 1084 MEMORY UNIT

EP 3 197 001 A1

# FIG. 22

200'

**POWER MANAGEMENT APPARATUS**

202

**1ST POWER MANAGEMENT UNIT**

201

| NETWORK I/F UNIT |
| --- |

221
**TOTAL POWER CALCULATION UNIT**

222
**POWER DISTRIBUTION DETERMINATION UNIT**

223
**DISTRIBUTION CONTROL UNIT**

224
**INVERTER EFFICIENCY DATA STORING UNIT**

225
**OUTPUT CONTROL UNIT**

# FIG. 23

START

S101
ACQUIRING SURPLUS POWER
OF SOLAR CELLS

S102
CALCULATION OF SURPLUS POWER

S103
ACQUIRING INVERTER EFFICIENCY
CHARACTERISTICS OF INVERTERS

S104
DETERMINATION OF STORAGE BATTERIES
(CHARGEABLE BATTERIES), AND TOTAL CHARGEABLE POWER
AND POWER TO BE DISTRIBUTED TO STORAGE BATTERIES

S105
CHARGING STORAGE BATTERIES
AS DISTRIBUTION TARGET

S106
SURPLUS POWER REMAINING ? — NO

YES

S107
OUTPUT CONTROL REQUESTED ? — NO

YES

S108
IMPLEMENTATION OF OUTPUT
CONTROL ON CUSTOMER FACILITY

END

## INTERNATIONAL SEARCH REPORT

| | International application No. |
|---|---|
| | PCT/JP2015/076360 |

**A. CLASSIFICATION OF SUBJECT MATTER**
*H02J3/32(2006.01)i, H02J3/00(2006.01)i, H02J3/38(2006.01)i*

According to International Patent Classification (IPC) or to both national classification and IPC

**B. FIELDS SEARCHED**

Minimum documentation searched (classification system followed by classification symbols)
H02J3/32, H02J3/00, H02J3/38

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2014-33539 A  (Sharp Corp.),<br>20 February 2014 (20.02.2014),<br>paragraphs [0008] to [0020], [0027] to [0085]<br>(Family: none) | 1-3,6-21<br>4-5,22-23 |
| Y<br>A | JP 2012-60789 A  (Toshiba Corp.),<br>22 March 2012 (22.03.2012),<br>paragraphs [0076] to [0082]; fig. 15 to 16<br>& US 2012/0065792 A1<br>paragraphs [0101] to [0107]; fig. 15 to 16 | 1-3,6-21<br>4-5 |

| ☒ Further documents are listed in the continuation of Box C. | ☐ See patent family annex. |
|---|---|

| * Special categories of cited documents: | "T" | later document published after the international filing date or priority date and not in conflict with the application but cited to understand the principle or theory underlying the invention |
|---|---|---|
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 19 October 2015 (19.10.15) | 02 November 2015 (02.11.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**INTERNATIONAL SEARCH REPORT**

| International application No. |
|---|
| PCT/JP2015/076360 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2013-501488 A  (The Regents of the University of Michigan),<br>10 January 2013 (10.01.2013),<br>paragraph [0032]<br>& US 2011/0025258 A1<br>paragraph [0032]<br>& WO 2011/014667 A2     & KR 10-2012-0089255 A | 1-3,6-21<br>4-5 |
| Y<br>A | JP 2014-64449 A  (Sekisui Chemical Co., Ltd.),<br>10 April 2014 (10.04.2014),<br>paragraphs [0037] to [0075]; fig. 3 to 10<br>(Family: none) | 8-15,19-21<br>22-23 |
| Y<br>A | JP 2012-60775 A  (The Tokyo Electric Power Co., Inc.),<br>22 March 2012 (22.03.2012),<br>paragraphs [0001] to [0010]<br>(Family: none) | 19-21<br>22-23 |

Form PCT/ISA/210 (continuation of second sheet) (July 2009)

**INTERNATIONAL SEARCH REPORT**

International application No.

PCT/JP2015/076360

Scope of the Search

Claims 3-4
Claims 3 and 4 respectively recite "the aforementioned second filter prediction function for estimating the aforementioned estimated generated power is the following formula (2)" and "a first function for weighting parameter w1 for each tap in the aforementioned first filter prediction function for estimating the aforementioned estimated generated power is the following formula (3)." However, formula (2) expresses weighting parameter w1, and formula (3) does not express a first function for weighting parameter w1.

Paragraphs [0076] and [0077], for example, of the Detailed Description of the Invention indicate that formula (2) of claim 3 is weighting function w1. Further, paragraphs [0081] and [0082] indicate that formula (3) of claim 4 is a formula for determining the generated power in the next measurement period. Therefore, it is unclear whether formula (2) of claim 3 is a second filter prediction function or a first function for weighting parameter w1. Further, it is unclear whether formula (3) of claim 4 is a first function for weighting parameter w1 or a second filter prediction function.

Therefore, claims 3 and 4 do not satisfy the requirement of clarity of PCT Article 6.

Given the above, because the invention could not be specified from the recitations of the claims, the Detailed Description of the Invention was taken into consideration, and the search was carried out for an invention in which formula (2) of claim 3 and formula (3) of claim 4 were switched.

Claim 23
Claim 23 indicates that "the aforementioned power management unit carries out output suppression from a first customer facility at which the aforementioned storage battery is fully charged and <u>the aforementioned second customer facility having the storage battery</u>."
Claim 21, which is referred to by claim 23, recites "another second customer facility that does not include one from among the aforementioned storage battery and the aforementioned power generation apparatus." Thus, the "second customer facility having the storage battery" does not include the power generation apparatus. This being the case, the invention as in claim 23 suppresses the output of a customer facility that does not include a power generation apparatus, and is thus unclear.

Therefore, claim 23 does not satisfy the requirement of clarity of PCT Article 6.

Given the above, because a meaningful search could not be carried out for the invention as in claim 23 wherein "output suppression is carried out from a first customer facility at which the aforementioned storage battery is fully charged and <u>the aforementioned second customer facility having the storage battery</u>," the search for claim 23 was conducted for "a power management method according to claim 21 characterized in that the aforementioned power management unit carries out output suppression from a first customer facility at which the aforementioned storage battery is fully charged."

Form PCT/ISA/210 (extra sheet) (July 2009)

50

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014188285 A
- JP 2015143175 A
- JP 2012044733 A
- JP 2013215092 A
- JP 2012055078 A